(19) Europäisches Patentamt / European Patent Office / Office européen des brevets

(11) **EP 2 885 785 B1**

(12) **EUROPEAN PATENT SPECIFICATION**

(45) Date of publication and mention of the grant of the patent:
**13.10.2021 Bulletin 2021/41**

(21) Application number: **13715927.3**

(22) Date of filing: **27.03.2013**

(51) Int Cl.:
***G11B 20/00*** (2006.01)

(86) International application number:
**PCT/EP2013/056617**

(87) International publication number:
**WO 2014/154271 (02.10.2014 Gazette 2014/40)**

(54) **DATA PROCESSING**

DATENVERARBEITUNG

TRAITEMENT DE DONNÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.06.2015 Bulletin 2015/26**

(73) Proprietor: **Irdeto B.V.**
**2132 LS Hoofddorp (NL)**

(72) Inventors:
• **EFTEKHARI ROOZBEHANI, Yaser**
**Ottawa, Ontario K2K 3G5 (CA)**
• **WIENER, Michael**
**Ottawa, Ontario K2K 3G5 (CA)**
• **ZHOU, Yongxin**
**Ottawa, Ontario K2K 3G5 (CA)**
• **GU, Yuan**
**Ottawa, Ontario K2K 3G5 (CA)**

(74) Representative: **Boult Wade Tennant LLP**
**Salisbury Square House**
**8 Salisbury Square**
**London EC4Y 8AP (GB)**

(56) References cited:
**US-A1- 2005 154 964      US-A1- 2011 004 812**
**US-A1- 2011 185 265      US-A1- 2012 246 548**

• **None**

**Description**

**Field of the invention**

The present invention relates to methods of processing data, and apparatus and computer programs for carrying out such methods.

**Background of the invention**

Error control codes (ECCs) are very well-known. In particular, a sender may wish to send a message m to a receiver. In order for the sender to be able to communicate the message m reliably to the receiver over a noisy communications channel, the sender may use an ECC to add an amount of redundancy to the message m (in a process known as "encoding") to generate a codeword c of the ECC. The sender may then send the codeword c to the receiver instead of just sending the message m to the receiver. The receiver may receive data c' representing the codeword c that the sender sent out - the data c' may be equal to the codeword c if the communications channel has not introduced any errors or noise into the codeword c; alternatively, the data c' may be equal to the codeword c with the addition of one or more errors introduced by the noisy communications channel. The receiver may process the received data c'. If the ECC is an error *correcting* code, and if the number of errors introduced into the codeword c by the noisy communications channel to produce the data c' does not exceed the error correcting capability of the ECC, then the redundancy introduced by the encoding performed by the sender allows the receiver to correct the errors and retrieve the original message m from the data c' (in a process known as "decoding"). If the ECC is an error *detecting* code, and if the number of errors introduced into the codeword c by the noisy communications channel to produce the data c' does not exceed the error detecting capability of the ECC, then the redundancy introduced by the encoding performed by the sender allows the receiver to detect (although not necessarily correct) the errors (in a process again known as "decoding").

Some ECCs are so-called "block" ECCs. A block ECC transforms an original message m of length k symbols into a codeword c of length n symbols (where n>k), where the symbols are taken from some symbol alphabet. Suppose that an original amount of data D that is to be encoded with a block ECC comprises ak+b symbols (where a and b are integers, a≥0 and 0≤b<k). The original amount of data D may be encoded using the block ECC as follows. If a>0, then a messages $m_1,...,m_a$, each of length k symbols, are formed from the original amount of data D (for example, message $m_i$ comprises the $((i-1)k+1)^{th}$ symbol to the $ik^{th}$ symbol of the data D) - these messages may then be separately encoded using the ECC to form respective codewords $c_1,...,c_a$. If b≠0, then a message m* is formed, where the message m* comprises the remaining b unencoded symbols (in the above example, the last b symbols) of the original amount of data D; the remaining (k-b) symbols of the message m* could be redundant padding symbols (for example, "0" symbols), or could be some of the original amount of data D. This message m* is then encoded using the ECC to form a codeword c*. The ECC encoded form of the original amount of data D then comprises $c_1,...,c_a$ (if a>0) together with c* (if b≠0).

In the following, the symbols forming a message m or a codeword c are viewed as, and treated as, elements of the finite field GF(q), where q = $p^f$ for some prime number p and positive integer f - i.e. GF(q) is the symbol alphabet. A string (or sequence) of t symbols $s_0$, $s_1$, ..., $s_{t-2}$, $s_{t-1}$ is then said to correspond to, or can be represented by, the polynomial $$s_0 X^{t-1} + s_1 X^{t-2} + ... + s_{t-2} X + s_{t-1} = \sum_{i=0}^{t-1} s_{t-i-1} X^i$$ . Thus, a message m comprising k symbols $m_0$, $m_1$, ..., $m_{k-2}$, $m_{k-1}$ corresponds to, or is represented by, the polynomial

$$m(X) = m_0 X^{k-1} + m_1 X^{k-2} + ... + m_{k-2} X + m_{k-1} = \sum_{i=0}^{k-1} m_{k-i-1} X^i$$ , and a codeword c comprising n symbols $c_0$, $c_1$, ..., $c_{n-2}$, $c_{n-1}$ corresponds to, or is represented by, the polynomial

$$c(X) = c_0 X^{n-1} + c_1 X^{n-2} + ... + c_{n-2} X + c_{n-1} = \sum_{i=0}^{n-1} c_{n-i-1} X^i .$$

A particular class of block ECCs are the so-called "polynomial" ECCs. A polynomial ECC has an associated polynomial called its "generator" polynomial g(X) which has degree n-k and coefficients in GF(q). There are many ways of carrying out encoding using a polynomial ECC. One way, called "systematic encoding", involves encoding the message m(X) as the codeword c(X), where c(X) = m(X)$X^{n-k}$ +r(X) where r(X) is a "parity-check" polynomial defined as the remainder of dividing m(X)$X^{n-k}$ by g(X). Another way, called "non-systematic encoding", involves encoding the message m(X) as the codeword c(X), where c(X) = g(X)m(X). Other ways of forming a codeword c(X) from a message m(X) exist, but the polynomial w(X) is a codeword of the ECC if and only if w(X)=v(X)g(X) for some polynomial v(X) of degree at most k (the different encoding methods simply correspond to different mappings between the possible messages and the available codewords)..

There are various well-known examples of polynomial ECCs. All "cyclic" ECC codes are polynomial ECCs - a polynomial ECC will be a cyclic code if and only if g(X) is a factor of $X^n$-1. So-called BCH codes are a particular form of polynomial ECC, in which the generator polynomial is chosen so that the Hamming distance between the codewords of the ECC is high (so that its error correction capability is correspondingly high). A subset of the BCH codes are the Reed-Solomon codes. For a Reed-Solomon code, let s and t be positive integers as design parameters for the code, then: the symbol alphabet is the finite field GF($2^s$); n = $2^s$ -1; the error correcting capability of the code is t; t relates to the message length k by k = n - 2t; and the generator polynomial g(X) is based on a primitive polynomial p(X) of degree s over GF(2) - let $\alpha$ be a root of p(X), then g(X) can be defined as g(X) = $(X + \alpha)(X + \alpha^2)\cdots(X + \alpha^{2t})$. Reed-Solomon codes are cyclic codes.

Polynomial ECCs are linear block codes. In particular, let $\delta_1$ and $\delta_2$ be elements of GF(q) and let $m_1$ and $m_2$ be two message polynomials, with corresponding codewords $c_1$ and $c_2$. Then the codeword that results from encoding the message $\delta_1 m_1 + \delta_2 m_2$ is $\delta_1 c_1 + \delta_2 c_2$.

As ECC codes and their properties are well-known, a more detailed discussion of them shall not be given herein. The skilled person is assumed to be knowledgeable about ECC codes, types of ECC codes, ways of performing ECC encoding, and corresponding ways of performing ECC decoding. For example, Reed-Solomon codes have been studied and documented in great detail, and the corresponding encoding and decoding methods are very well known.

The "data flow transformation" is an important technology for helping to protect software (e.g. a program or an application) from attacks performed by an attacker (who may, for example, wish to obtain secret or sensitive information from the software, such as a cryptographic key). With a data flow transformation, the protection of data and/or operations of the software is implemented by re-writing (or replacing) the whole or a part of the software with new code - the new (replacement) code is generated by performing one or more data and/or operation transformations on the data and/or operations that are to be protected. Such transformations are well-known, and are sometimes referred to as software obfuscation techniques. At present, the new code (generated after applying specific data and/or operation transformations) is fixed inside the new version of the original software. Applying different data transformations to the same data and/or operations of the software should result in different instances or versions of the software that is to be protected. Such diversity (namely different instances of the same software) is called "code-based diversity". Hence, in order to obtain different diversified instances of the software, the transformation process has to be repeated by applying different data and/or operation transformations to the same software. From the view of software distribution, deployment, and maintenance including security renewability, such code-based diversity introduces unavoidable overhead and inconveniences.

In US2011/0004812 there is disclosed a method for encoding and decoding an error correction code.

In US2011/0185265 it is disclosed that agile BCH encoders are useful when the noise characteristics of the channel change which demands that the strength of the error correcting BCH code to be a variable.

In US2012/0246548 there is disclosed a wireless communication device including a transmitter configured to transmit a transport block with a sequence of bits.

## Summary of the invention

According to a first aspect of the invention, there is provided a method of processing data, using a data processor, according to a first predetermined function, the method comprising: receiving an encoded amount of data, wherein the encoded amount of data is an amount of data that has been encoded using an error control code; and processing the encoded amount of data using a second predetermined function to generate an output; wherein the second predetermined function corresponds to the first predetermined function in that the result of processing, with the second predetermined function, a quantity of data encoded using the error control code equals the result of encoding with the error control code the result of processing the quantity of data with the first predetermined function.

In some embodiments, the method comprises: using the error control code to detect whether there is an error in the received encoded amount of data or whether there is an error in the output and, if an error is detected, performing one or more of: (a) setting the output to be substantially unrelated to the received encoded amount of data; (b) setting the output to be a random value; (c) performing an error correction decoding operation of the error control code on the received encoded amount of data or on the output; (d) ceasing further processing operations.

According to a second aspect of the invention, there is provided a method of enabling a data processor to process data according to a first predetermined function, the method comprising: generating a second function that corresponds to the first predetermined function in that the result of processing, with the second function, a quantity of data encoded using a predetermined error control code equals the result of encoding with the error control code the result of processing the quantity of data with the first predetermined function; and configuring the data processor to use the second function to process encoded data, wherein the encoded data is data encoded according to the error control code.

In some embodiments, it is not possible to determine a generator polynomial of the predetermined error control code from the second function.

According to a third aspect of the invention, there is provided a method of providing data to a first entity from a second entity, the first entity being arranged to process the data according to a first predetermined function by carrying out a method according to the first aspect of the invention, the method comprising: the second entity encoding the data using an error control code to thereby generate an encoded amount of data; and the second entity providing the encoded amount of data to the first entity.

In some embodiments, the second entity adds a correctable error to the encoded amount of data before providing the encoded amount of data to the first entity. The error may be dependent on the data or may be randomly generated. In some embodiments, the second entity is arranged to add a first error to the encoded amount of data at a first time of providing the encoded amount of data to the first entity and is arranged to add a second error to the encoded amount of data at a second time of providing the encoded amount of data to the first entity, wherein the second error is different from the first error.

In some embodiments, the error correction code used by the first entity and the second entity is dependent, at least in part, on the data.

According to a fourth aspect of the invention, there is provided a system arranged to carry out any one of the above-described methods.

According to a fifth aspect of the invention, there is provided a computer program which, when executed by a processor, causes the processor to carry out any one of the above-described methods. The computer program may be stored on a computer readable medium.

With embodiments of the invention, errors may be introduced into encoded data that is provided from an encoder, such that a decoder is able to remove the effect of the error following the processing of the encoded data (with the error) by the second predetermined function. In this way, it is possible to use such errors to control ECC based data transformations. This enhances the level of diversity available in that diversity may be structured into two kinds of diversities: (1) code-based diversity (different diversity comes from providing and executing a different instance of code, where the different instances are generated by applying different transformations to initial, or baseline, code); and (2) data-based diversity (different diversity comes from applying different control data to the same version of diversified code). Therefore, compared to the currently existing purely code-based diversity technology, the use of ECC in accordance with embodiments of the invention provides an effective way of helping increase the amount of diversity available.

Moreover, the use of ECC in accordance with embodiments of the invention provides a method of obfuscating the implementation of a function and provides a mechanism for making it more difficult for an attacker to attack a piece of software (such as by trying to perform fault-injection attacks).

Various other advantages of embodiments of the invention will become apparent from the following description of the invention.

## Brief description of the drawings

Embodiments of the invention will now be described, by way of example only, with reference to the accompanying drawings, in which:

Figures 1A and 1B together schematically illustrate an overview of embodiments of the invention;
Figure 1C schematically illustrates a prior art method of carrying out a function using ECC;
Figure 2 schematically illustrates an example of a computer system according to an embodiment of the invention;
Figure 3 schematically illustrates an arrangement for implementing a dot product operation according to an embodiment of the invention;
Figure 4 schematically illustrates an arrangement for implementing a general operation; and
Figure 5 schematically illustrates a system according to an embodiment of the invention.

## Detailed description of embodiments of the invention

In the description that follows and in the figures, certain embodiments of the invention are described. However, it will be appreciated that the invention is not limited to the embodiments that are described and that some embodiments may not include all of the features that are described below. It will be evident, however, that various modifications and changes may be made herein without departing from the scope of the invention as set forth in the appended claims.

### (1) System overview

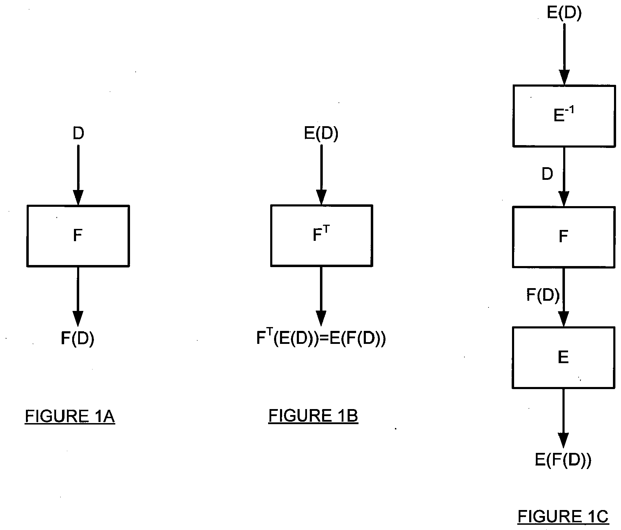

Figures 1A and 1B together schematically illustrate an overview of embodiments of the invention.

In figure 1A, a predetermined function F is arranged to: (a) receive, or obtain, an amount of input data D; (b) process the input data D according to one or more predetermined processing steps that define the function F; and (c) output, or provide, the result of the processing, i.e. processed data F(D).

In embodiments of the invention, the function F is replaced by a corresponding transformed version of the function F, labelled $F^T$ in figure 1B. In figure 1B, the function $F^T$ is arranged to: (a) receive, or obtain, an amount of input ECC encoded data E(D); (b) process the input ECC encoded data E(D) according to one or more predetermined processing steps that define the function $F^T$; and (c) output, or provide, the result of the processing, i.e. processed data $F^T(E(D))$. In the following, given an amount of data D and an ECC, the result of applying the ECC encoding to the data D shall be represented as E(D). Similarly, the result of applying the ECC decoding to the data D shall be represented as $E^{-1}(D)$. The function $F^T$ is related to the initial predetermined function F in that $F^T(E(D))=E(F(D))$ or, put another way, $F(D)=F^1(F^T(E(D)))$. This means that the result of performing the function $F^T$ on the ECC encoded version E(D) of the data D (i.e. when E(D) is the input to the function $F^T$), is the same as the result E(F(D)) of performing ECC encoding on the result F(D) of performing the function F on the data D (i.e. when D is the input to the function F).

The use of the function $F^T$ provides several advantages. In particular, referring to figure 1C, suppose that an amount of data D is received, or is being stored, in an ECC encoded form, i.e. as E(D) and suppose that the intention is to generate an ECC encoded version of the result of applying the predetermined function F to the data D, i.e. the desire is to output, or store or otherwise provide, E(F(D)). The approach previously adopted would have been to perform processing as shown in figure 1C, namely: (a) receive, or obtain, an amount of input ECC encoded data E(D); (b) perform ECC decoding on E(D) so as to determine the initial amount of data D; (c) process the data D according to one or more predetermined processing steps that define the function F; (d) perform ECC encoding on the processed data F(D) so as to generate E(F(D)); and (e) output, or provide, E(F(D)). The same end effect (namely outputting or providing E(F(D))) is achieved using embodiments of the invention as illustrated in figure 1B. However, using the function $F^T$ in embodiments of the invention means that the ECC decoding of figure 1C need not be performed on the received ECC encoded data E(D) and the subsequent ECC encoding of figure 1C need not be performed on the calculated processed data F(D). This helps reduce the amount of processing and power required, particularly as ECC encoding, and certainly as ECC decoding, can be computationally intensive.

It may be desirable to provide a secured version of the function F. For example, the function F may be the whole or a part of a cryptographic process and may comprise, or use, secret information (such as a cryptographic key) and it may, therefore, be desirable to try to prevent an attacker (who may, for example, wish to manipulate the operation of, or data processed by, the function F in order to try to ascertain secret information, such as a cryptographic key used by the function F or elsewhere in the cryptographic process) from manipulating the operation of, or data processed by, the function F (or at least try to make it more difficult for an attacker to successfully manipulate the operation of, or data processed by, the function F so as to achieve a desired result). As such, it may be desirable to not expose the data D and/or the working of the function F to an attacker in a manner that allows the attacker to modify the data D or the working of the function F, i.e. it may be desirable to provide an obfuscated version of the function F. Thus, use of the function $F^T$ enables one to provide encoded data E(D) as an input (instead of the data D) and to use the function $F^T$ instead of the function F, so that one can determine $F(D)=E^{-1}(F^T(E(D)))$. As will become apparent from the discussion below, if an attacker tries to modify such encoded input data E(D), or tries to modify the operation of the function $F^T$, then such modification can be detected (due to the nature of the ECC) and appropriate measures may then be taken.

For example, some systems operate on, or with, sensitive or secret information (such as encrypted or scrambled content or cryptographic keys). In such systems, it is known for attackers to carry out so-called "fault injection attacks", in which the attacker deliberately modifies one or more bits or parts of the input data that is to be processed in order to determine or observe the effect of that modification on the output processed data, with the aim of using such observations to deduce some or all of the sensitive information. Embodiments of the invention enable data to be processed, and remain, in a domain (the ECC encoded domain) that enables such modifications to be corrected - such corrections therefore cancel out the modifications that the attacker makes, rendering the attacker's attacks worthless, or at least making it harder for the attacker to deduce the sensitive information. As the embodiments shown in figure 1B do not reveal the original data D, which is in the non-ECC encoded domain, and only operate in the ECC encoded domain, it is hard for the attacker to carry out fault injection attacks. In contrast, the approach of figure 1C would provide an attacker with access to the original data D, and the attacker would be able to manipulate or modify the original data D in order to carry out his fault injection attack. Even if systematic encoding were used, where the original data D is explicitly part of the encoded version E(D) in figure 1B, an attacker wishing to modify the original data D within E(D) would also need to know how to modify the remainder part within E(D) (based on the modified data D) in order to be able to carry out a successful fault injection attack without the attack being detected - this is something that the attacker may not be able to do if the ECC being used is not available or known to the attacker.

It should be noted that if two functions $F_1$ and $F_2$ are implemented as respective transformed versions $F_1^T$ and $F_2^T$, then

$$(F_2 \circ F_1)(D) = F_2(F_1(D))$$
$$= E^{-1}(F_2^T(E(E^{-1}(F_1^T(E(D))))))$$
$$= E^{-1}(F_2^T(F_1^T(E(D))))$$
$$= E^{-1}((F_2^T \circ F_1^T)(E(D))$$

so that the functions $F_1^T$ and $F_2^T$ can be concatenated as $F_2^T \circ F_1^T$ in order to implement $F_2 \circ F_1$ without having to remove/decode the ECC and then reapply the ECC between $F_1^T$ and $F_2^T$. This applies, of course, analogously to a concatenation of more than two functions.

An additional advantage is that embodiments of the invention can increase the "diversity" available to the sender (or originator) of the data D that is to be processed by the function F. In particular, if data is to be processed by a first entity (e.g. a client or a first function within an item of software), then a second entity (e.g. a server or a second function within the item of software) might send to the first entity an ECC encoded version (namely E(D)) of the original data D together with an amount of noise added to the ECC encoded data. In other words, the second entity may apply a modification to the ECC encoded data so as to produce modified ECC encoded data. As the second entity can add a large number of different noise patterns to the ECC encoded data without preventing the ECC decoding from being able to recover the correctly processed data, the second entity can send the same original data D to the first entity in a secured manner in a larger number of ways, i.e. by sending the ECC encoded original data with one of a large number of available noise patterns added or modifications made (where the noise pattern only results in errors in the processed data, namely the output $F^T(E^{-1}(D))$ of $F^T$, that are correctable by the ECC decoding so as to generate the correct value F(D)). An eavesdropper/attacker would not know whether or not noise had been added, let alone what the noise pattern might actually be, thereby making it more difficult for the eavesdropper/attacker to access the original data. Moreover, if the second entity wishes to send the original data D multiple times to the first entity, then the second entity may add different noise or errors to E(D) each time. This will confuse any potential attacker as the modified data (i.e. the data that is transmitted) changes each time, even if the original underlying data D remains the same. The noise added each time can be completely random or driven by the input data or any other dependency relevant to the application.

In the context of software protection, such diversity introduces new capabilities that are of real importance. As mentioned, current methods of introducing diversity involve re-writing the software so that the data and/or operations are transformed, and diversity is introduced inside the software by using different transformations for different instances of the software. However, once an instance of the software is created and distributed, its diversity cannot subsequently be changed. Issuing a new version of the software involves generating the new version using new transformations, which introduces delay, various overhead and other inconveniences. However, with embodiments of the invention, the addition of error (as the diversity) can be added independent of the software. The error may or may not depend on the input data as per the requirement of the application. Moreover, the design parameters, such as the generator polynomial, can be made dependent on the input data (provided that the entity that performs the ECC encoding and the entity that performs the ECC decoding are arranged to determine and use the same design parameters, such as the generator polynomial).

Embodiments of the invention, which operate according to the processing shown in figure 1B, therefore provide advantages over the processing workflows shown in figures 1A and 1C.

In embodiments of the invention, the ECC may be used to detect whether there is an error in the received encoded amount of data E(D) or whether there is an error in the output $F^T(E(D))$. If an error is detected, then an appropriate action may be taken, which could include one or more of: ceasing further processing operations; setting the output to be substantially unrelated to the received encoded amount of data (such as by setting the output to be a random value); or performing an error correction decoding operation of the ECC on the erroneous data E(D) or $F^T(E(D))$ as appropriate so as to correct the detected errors.

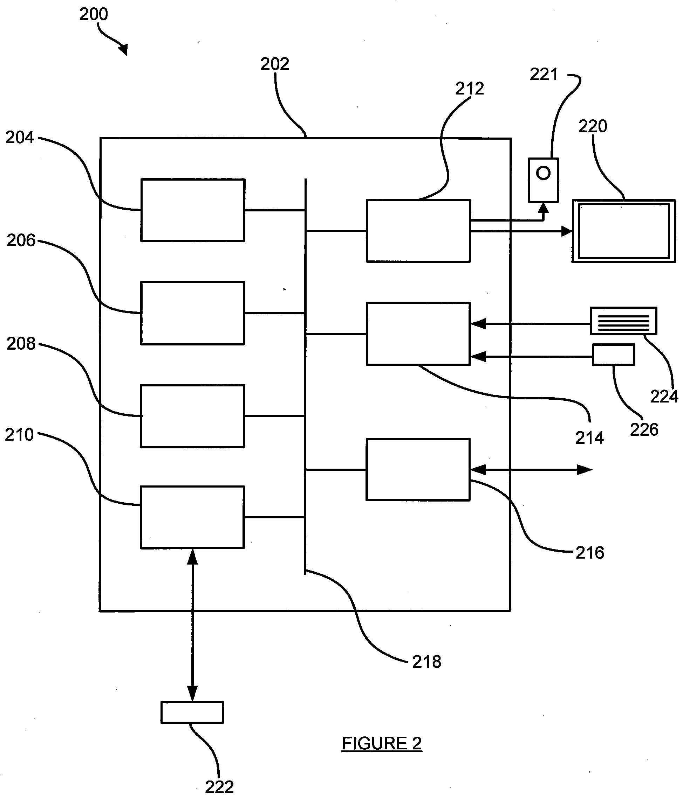

The function $F^T$ shown in figure 1B, may be carried out by one or more computer systems 200, and/or may be implemented as software components or computer programs/modules executing on one or more computer systems 200. Figure 2 schematically illustrates an example of a computer system 200. The system 200 comprises a computer 202. The computer 202 comprises: a storage medium 204, a memory 206, a processor 208, an interface 210, a user output interface 212, a user input interface 214 and a network interface 216, which are all linked together over one or more communication buses 218.

The storage medium 204 may be any form of non-volatile data storage device such as one or more of a hard disk drive, a magnetic disc, an optical disc, a ROM, etc. The storage medium 204 may store an operating system for the processor 208 to execute in order for the computer 202 to function. The storage medium 204 may also store one or more computer programs (or software or instructions or code).

The memory 206 may be any random access memory (storage unit or volatile storage medium) suitable for storing data and/or computer programs (or software or instructions or code).

The processor 208 may be any data processing unit suitable for executing one or more computer programs (such as those stored on the storage medium 204 and/or in the memory 206), some of which may be computer programs according to embodiments of the invention or computer programs that, when executed by the processor 208, cause the processor 208 to carry out a method according to an embodiment of the invention and configure the system 200 to be a system according to an embodiment of the invention. The processor 208 may comprise a single data processing unit or multiple data processing units operating in parallel or in cooperation with each other. The processor 208, in carrying out data processing operations for embodiments of the invention, may store data to and/or read data from the storage medium 204 and/or the memory 206.

The interface 210 may be any unit for providing an interface to a device 222 external to, or removable from, the computer 202. The device 222 may be a data storage device, for example, one or more of an optical disc, a magnetic disc, a solid-state-storage device, etc. The device 222 may have processing capabilities - for example, the device may be a smart card. The interface 210 may therefore access data from, or provide data to, or interface with, the device 222 in accordance with one or more commands that it receives from the processor 208.

The user input interface 214 is arranged to receive input from a user, or operator, of the system 200. The user may provide this input via one or more input devices of the system 200, such as a mouse (or other pointing device) 226 and/or a keyboard 224, that are connected to, or in communication with, the user input interface 214. However, it will be appreciated that the user may provide input to the computer 202 via one or more additional or alternative input devices (such as a touch screen). The computer 202 may store the input received from the input devices via the user input interface 214 in the memory 206 for the processor 208 to subsequently access and process, or may pass it straight to the processor 208, so that the processor 208 can respond to the user input accordingly.

The user output interface 212 is arranged to provide a graphical/visual and/or audio output to a user, or operator, of the system 200. As such, the processor 208 may be arranged to instruct the user output interface 212 to form an image/video signal representing a desired graphical output, and to provide this signal to a monitor (or screen or display unit) 220 of the system 200 that is connected to the user output interface 212. Additionally or alternatively, the processor 208 may be arranged to instruct the user output interface 212 to form an audio signal representing a desired audio output, and to provide this signal to one or more speakers 221 of the system 200 that is connected to the user output interface 212.

Finally, the network interface 216 provides functionality for the computer 202 to download data from and/or upload data to one or more data communication networks.

It will be appreciated that the architecture of the system 200 illustrated in figure 2 and described above is merely exemplary and that other computer systems 200 with different architectures (for example with fewer components than shown in figure 2 or with additional and/or alternative components than shown in figure 2) may be used in embodiments of the invention. As examples, the computer system 200 could comprise one or more of: a personal computer; a server computer; a mobile telephone; a tablet; a laptop; a television set; a set top box; a games console; a personal computer; a server computer; other mobile devices or consumer electronics devices; a smart card; etc.

## (2) Definitions

Before discussing how the function $F^T$ can be determined from a predetermined function F, a number of definitions are presented below.

• Generator polynomial:

$$g(X) = X^t + g_1 X^{t-1} + \cdots + g_{t-1} X + g_t \quad (\text{so that } g_0 = 1)$$

Note that if the ECC being used is a Reed-Solomon code, then t is even (as set out above).

• Message:

$$m(X) = m_0 X^{k-1} + m_1 X^{k-2} + \cdots + m_{k-2} X + m_{k-1}$$

• Codeword corresponding to m(X):

$$c(X) = c_0 X^{n-1} + c_1 X^{n-2} + \cdots + c_{n-2} X + c_{n-1}$$

- Parity-check polynomial corresponding to m(X) when using systematic encoding, i.e. the remainder after dividing $m(X)X^{n-k}$ by g(X):

$$r(X) = r_0 X^{n-k-1} + r_1 X^{n-k-2} + \cdots + r_{n-k-2} X + r_{n-k-1}$$

- i-th message (when multiple messages are being considered):

$$m_i(X) = m_{i,0} X^{k-1} + m_{i,1} X^{k-2} + \cdots + m_{i,k-2} X + m_{i,k-1}$$

- Codeword corresponding to $m_i(X)$:

$$c_i(X) = c_{i,0} X^{n-1} + c_{i,1} X^{n-2} + \cdots + c_{i,n-2} X + c_{i,n-1}$$

- Parity-check polynomial corresponding to $m_i(X)$ when using systematic encoding, i.e. the remainder after dividing $m_i(X)X^{n-k}$ by g(X):

$$r_i(X) = r_{i,0} X^{n-k-1} + r_{i,1} X^{n-k-2} + \cdots + r_{i,n-k-2} X + r_{i,n-k-1}$$

- Right shift on message m(X):

$$m^{(\rightarrow)}(X) = m_0 X^{k-2} + m_1 X^{k-3} + \cdots + m_{k-3} X + m_{k-2}$$

- Circular right shift on message m(X):

$$m^{(1)}(X) = m_{k-1} X^{k-1} + m_0 X^{k-2} + m_1 X^{k-3} + \cdots + m_{k-3} X + m_{k-2}$$

- Left shift on message m(X):

$$m^{(\leftarrow)}(X) = m_1 X^{k-1} + m_2 X^{k-2} + \cdots + m_{k-2} X^2 + m_{k-1} X$$

- Circular left shift on message m(X):

$$m^{(-1)}(X) = m_1 X^{k-1} + m_2 X^{k-2} + \cdots + m_{k-2} X^2 + m_{k-1} X + m_0$$

- In the following, $c^{(\rightarrow)}$, $c^{(1)}$, $c^{(\leftarrow)}$ and $c^{(-1)}$ represent analogous shifting operations on the codeword c in a similar manner to described above on the message m - they are not themselves necessarily codewords for a corresponding message.

### (3) Examples of $F^T$ given specific predetermined functions F

In the following subsections, a number of examples of the function $F^T$ are provided for a given function F. If using these functions $F^T$ with error added to the input to that function $F^T$ (e.g. for the purposes of diversity as set out above), then the error added to the input should be controlled so that the amount of error resulting in the output of the function $F^T$ is correctable, i.e. so that ECC decoding of the output of the function $F^T$ successfully removes the noise/error in the output of the function $F^T$.

### (3.1) Right shift transformation, using non-systematic encoding

Suppose that the function F is the right shift transformation of a message m(X), so that $F(m(X)) = m^{(\rightarrow)}(X)$. Suppose additionally that the ECC is applied using non-systematic encoding.

Assume that a non-systematic encoding of an initial message m(X) results in a codeword c(X). The question is, can the codeword c'(X) that would result from a non-systematic encoding of $m^{(\rightarrow)}(X)$ be computed without having to carry out the usual decoding of c(X)?

$$m^{(\rightarrow)}(X) = \frac{m(X) + m_{k-1}}{X}$$

$$\Rightarrow c'(X) := E(m^{(\rightarrow)}(X))$$

$$= m^{(\rightarrow)}(X)g(X)$$

$$= \frac{m(X)g(X) + m_{k-1}g(X)}{X}$$

$$= \frac{c(X) + m_{k-1}g(X)}{X}$$

$$= \frac{c(X) + c_{n-1}g_t^{-1}g(X)}{X} \text{ because } c_{n-1} = m_{k-1}g_t$$

$$= c^{(\rightarrow)}(X) + c_{n-1}g_t^{-1}g^{(\rightarrow)}(X)$$

Thus, it is possible to calculate c'(X) directly from c(X) and g(X), i.e. without having to carry out the usual decoding of c(X) to generate m(X), operate on m(X) to generate F(m(X)) and then ECC encode F(m(X)) to generate c'(X). Additionally, in this way, no information is revealed regarding m(X). In this example, $F^T(c(X)) = c'(X)$ as set out above.

### (3.2) Circular right shift transformation, using non-systematic encoding

Suppose that the function F is the circular right shift transformation of a message m(X), so that $F(m(X)) = m^{(1)}(X)$. Suppose additionally that the ECC is applied using non-systematic encoding.

Assume that a non-systematic encoding of an initial message m(X) results in a codeword c(X). The question is, can the codeword c'(X) that would result from a non-systematic encoding of $m^{(1)}(X)$ be computed without having to carry out the usual decoding of c(X)?

$$m^{(1)}(X) = \frac{m(X) + m_{k-1}}{X} + m_{k-1}X^{k-1}$$

$$\Rightarrow c'(X) := E(m^{(1)}(X))$$

$$= m^{(1)}(X)g(X)$$

$$= \frac{m(X)g(X) + m_{k-1}g(X)}{X} + m_{k-1}X^{k-1}g(X)$$

$$= \frac{c(X) + m_{k-1}g(X)}{X} + m_{k-1}X^{k-1}g(X)$$

$$= \frac{c(X) + c_{n-1}g_t^{-1}g(X)}{X} + c_{n-1}g_t^{-1}X^{k-1}g(X) \text{ because } c_{n-1} = m_{k-1}g_t$$

$$= c^{(\rightarrow)}(X) + c_{n-1}g_t^{-1}g^{(\rightarrow)}(X) + c_{n-1}g_t^{-1}X^{k-1}g(X)$$

Thus, it is possible to calculate c'(X) directly from c(X) and g(X), i.e. without having to carry out the usual decoding of c(X) to generate m(X), operate on m(X) to generate F(m(X)) and then ECC encode F(m(X)) to generate c'(X). Additionally, in this way, no information is revealed regarding m(X). In this example, $F^T(c(X)) = c'(X)$ as set out above.

### (3.3) Left shift transformation, using non-systematic encoding

Suppose that the function F is the left shift transformation of a message m(X), so that $F(m(X)) = m^{(\leftarrow)}(X)$. Suppose additionally that the ECC is applied using non-systematic encoding.

Assume that a non-systematic encoding of an initial message m(X) results in a codeword c(X). The question is, can the codeword c'(X) that would result from a non-systematic encoding of $m^{(\leftarrow)}(X)$ be computed without having to carry out the usual decoding of c(X)?

$$m^{(\leftarrow)}(X) = (m(X) + m_0 X^{k-1})X$$

$$\Rightarrow c'(X) := E(m^{(\leftarrow)}(X))$$

$$= m^{(\leftarrow)}(X)g(X)$$

$$= (m(X) + m_0 X^{k-1})Xg(X)$$

$$= Xc(X) + m_0 X^k g(X)$$

$$= Xc(X) + c_0 X^k g(X) \text{ because } c_0 = m_0.$$

Thus, it is possible to calculate c'(X) directly from c(X) and g(X), i.e. without having to carry out the usual decoding of c(X) to generate m(X), operate on m(X) to generate F(m(X)) and then ECC encode F(m(X)) to generate c'(X). Additionally, in this way, no information is revealed regarding m(X). In this example, $F^T(c(X)) = c'(X)$ as set out above.

### (3.4) Circular left shift transformation, using non-systematic encoding

Suppose that the function F is the circular left shift transformation of a message m(X), so that $F(m(X)) = m^{(-1)}(X)$. Suppose additionally that the ECC is applied using non-systematic encoding.

Assume that a non-systematic encoding of an initial message m(X) results in a codeword c(X). The question is, can the codeword c'(X) that would result from a non-systematic encoding of $m^{(-1)}(X)$ be computed without having to carry out the usual decoding of c(X)?

$$m^{(-1)}(X) = (m(X) + m_0 X^{k-1})X + m_0$$

$$\Rightarrow c'(X) := E(m^{(-1)}(X))$$

$$= m^{(-1)}(X)g(X)$$

$$= (m(X) + m_0 X^{k-1})Xg(X) + m_0 g(X)$$

$$= Xc(X) + m_0 X^k g(X) + m_0 g(X)$$

$$= Xc(X) + c_0(X^k + 1)g(X) \text{ because } c_0 = m_0.$$

Additionally, as $c^{(-1)}(X) = c_0(X^n + 1) + Xc(X)$, we can also express $c'(X)$ as

$$c'(X) = c^{(-1)}(X) + c_0(X^n + 1) + c_0(X^k + 1)g(X)$$

Thus, it is possible to calculate $c'(X)$ directly from $c(X)$ and $g(X)$, i.e. without having to carry out the usual decoding of $c(X)$ to generate $m(X)$, operate on $m(X)$ to generate $F(m(X))$ and then ECC encode $F(m(X))$ to generate $c'(X)$. Additionally, in this way, no information is revealed regarding $m(X)$. In this example, $F^T(c(X)) = c'(X)$ as set out above (using either of the expressions for $c'(X)$ given above).

### (3.5) Dot product transformation, using non-systematic encoding

Suppose that the function F is the dot product of two messages $m_1(X)$ and $m_2(X)$, so that

$$F(m_1(X), m_2(X)) = m_1(X) \bullet m_2(X) = \sum_{i=0}^{k-1} m_{1,i} m_{2,i} X^{k-1-i}$$

, the multiplication of $m_{1,i}$ with $m_{2,i}$ being the multiplication in GF(q) of two elements of GF(q) for $0 \le i \le k-1$. Suppose additionally that the ECC is applied using non-systematic encoding.

Assume that a non-systematic encoding of the two initial messages $m_1(X)$ and $m_2(X)$ results in respective codewords $c_1(X)$ and $c_2(X)$. Let the dot product of $m_1(X)$ and $m_2(X)$ be $m(X)$ where

$$m(X) = m_{1,0}m_{2,0}X^{k-1} + m_{1,1}m_{2,1}X^{k-2} + \cdots + m_{1,k-2}m_{2,k-2}X + m_{1,k-1}m_{2,k-1}$$

so that $m_i := m_{1,i}m_{2,i}$ for $0 \le i \le k-1$.

The question is, can the codeword $c(X)$ that would result from a non-systematic encoding of $m(X)$ be computed without having to carry out the usual decoding of $c_1(X)$ and $c_2(X)$? Three approaches for this are set out below.

*Approach 1:*

We note that for $c(X)$ we have equation set (1):

$$c_0 = m_0$$

$$c_1 = m_1 + m_0 g_1$$

$$c_2 = m_2 + m_1 g_1 + m_0 g_2$$

$$c_3 = m_3 + m_2 g_1 + m_1 g_2 + m_0 g_3$$

$$c_4 = m_4 + m_3 g_1 + m_2 g_2 + m_1 g_3 + m_0 g_4$$

$$c_5 = m_5 + m_4 g_1 + m_3 g_2 + m_2 g_3 + m_1 g_4 + m_0 g_5$$

$$c_6 = m_6 + m_5 g_1 + m_4 g_2 + m_3 g_3 + m_2 g_4 + m_1 g_5 + m_0 g_6$$

$$c_7 = m_7 + m_6 g_1 + m_5 g_2 + m_4 g_3 + m_3 g_4 + m_2 g_5 + m_1 g_6 + m_0 g_7$$

$$\vdots$$

This leads to equation set (2),

$$m_i = u_i(c(X), g(X)) + v_i(c(X), g(X)) + w_i(c(X), g(X)) \text{ for } 0 \le i \le k-1, \text{ where:}$$

$$u_0(c(X), g(X)) = c_0$$

$$u_1(c(X), g(X)) = c_1 + c_0 g_1$$

$$u_2(c(X), g(X)) = c_2 + c_1 g_1 + c_0 g_2$$

$$u_3(c(X), g(X)) = c_3 + c_2 g_1 + c_1 g_2 + c_0 g_3$$

$$u_4(c(X), g(X)) = c_4 + c_3 g_1 + c_2 g_2 + c_1 g_3 + c_0 g_4$$

$$u_5(c(X), g(X)) = c_5 + c_4 g_1 + c_3 g_2 + c_2 g_3 + c_1 g_4 + c_0 g_5$$

$$u_6(c(X), g(X)) = c_6 + c_5 g_1 + c_4 g_2 + c_3 g_3 + c_2 g_4 + c_1 g_5 + c_0 g_6$$

$$u_7(c(X), g(X)) = c_7 + c_6 g_1 + c_5 g_2 + c_4 g_3 + c_3 g_4 + c_2 g_5 + c_1 g_6 + c_0 g_7$$

$$\vdots$$

$$u_i(c(X), g(X)) = c_i + \sum_{j=0}^{i-1} c_j g_{i-j}$$

so that in general, for i>0,

$$v_0(c(X), g(X)) = 0$$

$$v_1(c(X), g(X)) = 0$$

$$v_2(c(X), g(X)) = c_0 g_1^2$$

$$v_3(c(X), g(X)) = c_1 g_1^2 + c_0 g_1^3$$

$$v_4(c(X), g(X)) = c_2 g_1^2 + c_1 g_1^3 + c_0 g_1^4$$

$$v_5(c(X), g(X)) = c_3 g_1^2 + c_2 g_1^3 + c_1 g_1^4 + c_0 g_1^5$$

$$v_6(c(X), g(X)) = c_4 g_1^2 + c_3 g_1^3 + c_2 g_1^4 + c_1 g_1^5 + c_0 g_1^6$$

$$v_7(c(X), g(X)) = c_5 g_1^2 + c_4 g_1^3 + c_3 g_1^4 + c_2 g_1^5 + c_1 g_1^6 + c_0 g_1^7$$

$$\vdots$$

so that in general, for i>1,

$$v_i(c(X), g(X)) = \sum_{j=0}^{i-2} c_j g_1^{i-j}$$

.

$$w_0(c(X), g(X)) = 0$$

$$w_1(c(X), g(X)) = 0$$

$$w_2(c(X), g(X)) = 0$$

$$w_3(c(X), g(X)) = 0$$

$$w_4(c(X), g(X)) = c_0 g_2^2 + c_0 g_1^2 g_2$$

$$w_5(c(X), g(X)) = c_1 g_2^2 + c_1 g_1^2 g_2 + c_0 g_1 g_2^2 + c_0 g_1^2 g_3$$

$$w_6(c(X), g(X)) = c_2 g_2^2 + c_2 g_1^2 g_2 + c_1 g_1 g_2^2 + c_1 g_1^2 g_3$$
$$+ c_0 g_3^2 + c_0 g_2^3 + c_0 g_1^4 g_2 + c_0 g_1^2 g_4$$

$$w_7(c(X), g(X)) = c_3 g_2^2 + c_3 g_1^2 g_2 + c_2 g_1 g_2^2 + c_2 g_1^2 g_3$$
$$+ c_1 g_3^2 + c_1 g_2^3 + c_1 g_1^4 g_2 + c_1 g_1^2 g_4$$
$$+ c_0 g_1 g_3^2 + c_0 g_1^2 g_5 + c_0 g_2^2 g_3 + c_0 g_1^4 g_3$$

$$\vdots$$

so that, in general, for i>4, $w_i$ can be formed from $w_{i-1}$ by:

(a) taking $w_{i-1}$ and, for each $c_j$ that occurs in the expression of $w_{i-1}$, increasing the subscript of that $c_j$ by 1 (i.e. so that $c_j$ is replaced by $c_{j+1}$) and
(b) determining the coefficients to use along with $c_0$ by using any multiplicative combination of elements $g_a$ according to the following rules:

(i) at most two elements $g_a{}^{d1}$ and $g_b{}^{d2}$ are allowed;
(ii) neither of $d_1$ nor $d_2$ can be both odd and greater than 1;
(iii) $d_1 a + d_2 b = i$
(iv) the multiplicative combination is not a coefficient of $c_0$ already encountered in $u_i(c(X),g(X))$ or $v_i(c(X),g(X))$
(v) having both $d_1$ and $d_2$ equal to 1 is not allowed.

In a similar manner, we can use equation set (2) to determine that $m_{1,i} = u_i(c_1(X),g(X)) + v_i(c_1(X),g(X)) + w_i(c_1(X),g(X))$ and $m_{2,i} = u_i(c_2(X),g(X)) + v_i(c_2(X),g(X)) + w_i(c_2(X),g(X))$ for $0 \leq i \leq k-1$, i.e. one can express $m_{1,i}$ as a function of $c_{1,j}$'s and $g_j$'s for $0 \leq i \leq k-1$ and similarly one can express $m_{2,i}$ as a function of $c_{2,j}$'s and $g_j$'s for $0 \leq i \leq k-1$.

As $m_{i'} = m_{1,i} m_{2,i}$, one can use the above equations to express $m_i$ as a function of $c_{1,j}$'s, $c_{2,j}$'s and $g_j$'s for $0 \leq i \leq k-1$, namely:

$$m_i = (u_i(c_1(X),g(X)) + v_i(c_1(X),g(X)) + w_i(c_1(X),g(X))) \times$$
$$(u_i(c_2(X),g(X)) + v_i(c_2(X),g(X)) + w_i(c_2(X),g(X)))$$

These expressions for $m_i$ can then be incorporated into equation set (1) to express $c_i$ as a function of $c_{1,j}$'s, $c_{2,j}$'s and $g_j$s for $0 \leq i \leq k-1$. Thus, it is possible to calculate $c(X)$ directly from $c_1(X)$, $c_2(X)$ and $g(X)$, i.e. i.e. without having to carry out the usual decoding of $c_1(X)$ and $c_2(X)$ to generate $m_1(X)$ and $m_2(X)$, operate on $m_1(X)$ and $m_2(X)$ to generate $F(m_1(X),m_2(X))$ and then ECC encode $F(m_1(X),m_2(X))$ to generate $c(X)$. Additionally, in this way, no information is revealed regarding $m_1(X)$ and $m_2(X)$. In this example, $F^T(c_1(X),c_2(X)) = c(X)$ as set out above.

*Approach 2:*

Different elements/coefficients of $c_1(X)$ and $c_2(X)$ can be multiplied together and then combined in order to calculate the elements/coefficients of $c(X)$. This is based on the following:

Let $A_0' = c_{1,0} c_{2,0}$ and define $A_0 := A_0' g_0{}^{-2} = (c_{1,0} g_0{}^{-1})(c_{2,0} g_0{}^{-1}) = m_{1,0} m_{2,0}$. Then $c_0 = A_0 g_0$.

Let $A_; = c_{1,1} c_{2,0}$ and define $A_1 := (A_1' + A_0 g_0 g_1) g_0{}^{-2} = m_{1,1} m_{2,0}$

Let $B_1' = c_{1,0} c_{2,1}$ and define $B_1 := (B_1' + A_0 g_0 g_1) g_0{}^{-2} = m_{1,0} m_{2,1}$

Let $C_1' = c_{1,1} c_{2,1}$ and define $C_1 := (C_1' + A_0 g_1{}^2 + A_1 g_0 g_1 + B_1 g_0 g_1) g_0{}^{-2} = m_{1,1} m_{2,1}$   Then $c_1 = A_0 g_1 + C_1 g_0$

Let $A_2' = c_{1,2} c_{2,0}$ and define $A_2 := (A_2' + A_0 g_0 g_2 + A_1 g_0 g_1) g_0{}^{-2} = m_{1,2} m_{2,0}$

Let $B_2' = c_{1,0} c_{2,2}$ and define $B_2 := (B_2' + A_0 g_0 g_2 + B_1 g_0 g_1) g_0{}^{-2} = m_{1,0} m_{2,2}$

Let $C_2' = c_{1,2} c_{2,1}$ and define

$$C_2 := (C_2' + A_0 g_1 g_2 + A_1 g_1{}^2 + B_1 g_0 g_2 + C_1 g_0 g_1 + A_2 g_0 g_1) g_0{}^{-2} = m_{1,2} m_{2,1}$$

Let $D_2' = c_{1,1} c_{2,2}$ and define

$$D_2 := (D_2' + A_0 g_1 g_2 + B_1 g_1{}^2 + A_1 g_0 g_2 + C_1 g_0 g_1 + B_2 g_0 g_1) g_0{}^{-2} = m_{1,1} m_{2,2}$$

Let $E_2' = c_{1,2} c_{2,2}$ and define

$$E_2 := (E_2' + C_1 g_1{}^2 + A_0 g_2{}^2 + (A_1 + B_1) g_1 g_2 + (A_2 + B_2) g_0 g_2 + (C_2 + D_2) g_0 g_1) g_0{}^{-2}$$
$$= m_{1,2} m_{2,2}$$

Then $c_2 = A_0 g_2 + C_1 g_1 + E_2 g_0$

This process can be continued in this manner for determining $c_i$ for i=3,4,...,(n-1). Thus, as shown above, each $c_i$ (for $0 \leq i \leq n-1$) can be calculated as a predetermined relationship/function of $g_j$'s and products of pairs of $c_{1,j}$'s, $c_{2,j}$'s. Thus, it is possible to calculate c(X) directly from $c_1(X)$, $c_2(X)$ and g(X), i.e. i.e. without having to carry out the usual decoding of $c_1(X)$ and $c_2(X)$ to generate $m_1(X)$ and $m_2(X)$, operate on $m_1(X)$ and $m_2(X)$ to generate $F(m_1(X),m_2(X))$ and then ECC encode $F(m_1(X),m_2(X))$ to generate c(X). Additionally, in this way, no information is revealed regarding $m_1(X)$ and $m_2(X)$. In this example, $F^T(c_1(X),c_2(X)) = c(X)$ as set out above.

*Approach 3:*

In this approach, we use the fact that $c_0=m_0$. Let $\tilde{c}^1(X) = c(X) + c_0 X^{k-1}g(X)$. Then $\tilde{c}^1(X)$ is a codeword, because $c_0 X^{k-1}g(X)$ is the codeword resulting from encoding $c_0 X^{k-1}$ and the sum of two codewords is a codeword (due to the linearity of the error correction code). Moreover, $\tilde{c}^1_0 = 0$ and $\tilde{c}^1_1 = m_1$. This can then be repeated. In particular, let $c_2(X) = \tilde{c}^1(X) + \tilde{c}^1_1 X^{k-2}g(X)$. This is again a codeword because $\tilde{c}^1_1 X^{k-2}g(X)$ is the codeword resulting from encoding $\tilde{c}^1_1 X^{k-2}$ and the sum of two codewords is a codeword. Moreover, $\tilde{c}^2_1 = 0$ and $\tilde{c}^2_2 = m_2$.

In general, if one defines $\tilde{c}^0(X) = c(X)$ and iteratively defines $\tilde{c}^{i+1}(X) = \tilde{c}^i(X) + \tilde{c}^i_i X^{k-1-i}g(X)$ for i=0,1,...,k-2, then $\tilde{c}^i_i = m_i$ for i=0,1,...,k-1 and $\tilde{c}^{i+1}_i = 0$ for i=0,1,...,k-2.

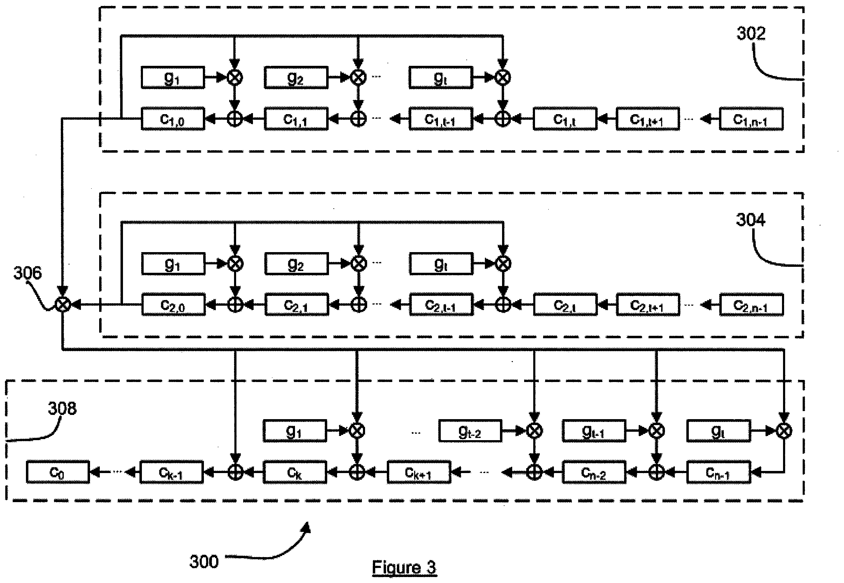

Figure 3 schematically illustrates an arrangement 300 for implementing the dot product operation. Each solid lined block labelled $c_{1,i}$, $c_{2,i}$ and $c_i$ is a shift register (shifting to the left in figure 3); each solid lined block containing elements $g_i$ of the generator polynomial g(X) are registers storing a respective element $g_i$; each $\oplus$ symbol is a GF(q) adder; and each $\otimes$ symbol is a GF(q) multiplier. The system 300 operates based on a single clock - with each tick/iteration of the clock, each shift register outputs its current contents and stores the value received at its input. The system 300 is initialized as follows:

- Registers labelled $c_{1,0}, c_{1,1}, ... , c_{1,n-1}$ are initialized with the respective elements $c_{1,0}, c_{1,1}, ... , c_{1,n-1}$ of the codeword $c_1(X)$, thereby providing a polynomial representation of $c_1(X)$, namely

$$c_{1,0}X^{n-1} + c_{1,1}X^{n-2} + \cdots + c_{1,n-2}X + c_{1,n-1}.$$

- Registers labelled $c_{2,0}, c_{2,1}, ... , c_{2,n-1}$ are initialized with the respective elements $c_{2,0}, c_{2,1}, ... , c_{2,n-1}$ of the codeword $c_2(X)$, thereby providing a polynomial representation of $c_2(X)$, namely

$$c_{2,0}X^{n-1} + c_{2,1}X^{n-2} + \cdots + c_{2,n-2}X + c_{2,n-1}.$$

- Registers labelled $c_0, c_1, ... , c_{n-1}$ are initialized with 0.
  k iterations are performed, at the end of which the desired output is $c(X) = c_0 X^{n-1} + c_1 X^{n-2} + \cdots + c_{n-2}X + c_{n-1}$. At the i-th iteration (clock tick), for $1 \leq i \leq k$:
- The block 302 outputs message element $m_{1,i}$.
- The block 304 outputs message element $m_{2,i}$.
- The feedback loop in the block 302 feeds back $m_{1,i}$ which is then multiplied by the generator polynomial g(X) and then added to the codeword currently stored in the registers labelled $c_{1,0}, c_{1,1}, ... , c_{1,n-1}$ to thereby cancel the effect of $m_{1,i}$ and store the next codeword $\tilde{c}^{i+1}(X)$ corresponding to codeword $c_1(X)$, as described above.
- The feedback loop in the block 304 feeds back $m_{2,i}$ which is then multiplied by the generator polynomial g(X) and then added to the codeword currently stored in the registers labelled $c_{2,0}, c_{2,1}, ..., c_{2,n-1}$ to thereby cancel the effect of $m_{2,i}$ and store the next codeword $\tilde{c}^{i+1}(X)$ corresponding to codeword $c_2(X)$, as described above.
- The multiplier 306 thus performs an XOR of $m_{1,i}$ and $m_{2,i}$, as part of the desired dot product.
- The output of the multiplier 306 is multiplied by the generator polynomial g(X) in the block 308, which is then added to the codeword currently being stored in the registers labelled $c_0, c_1, ... , C_{n-1}$.

Whilst the above has been described as being implemented using linear feedback shift registers, it will be appreciated that other implementations, such as software-based implementations, could be used instead.

Thus, it is possible to calculate c(X) directly from $c_1(X)$, $c_2(X)$ and g(X), i.e. i.e. without having to carry out the usual decoding of $c_1(X)$ and $c_2(X)$ to generate $m_1(X)$ and $m_2(X)$, operate on $m_1(X)$ and $m_2(X)$ to generate $F(m_1(X),m_2(X))$ and then ECC encode $F(m_1(X),m_2(X))$ to generate c(X). Additionally, in this way, no information is revealed regarding

$m_1(X)$ and $m_2(X)$. Here, $F^T(m(X))=c(X)$.

### (3.6) A more general operation transformation, using non-systematic encoding

Assume that a non-systematic ECC encoding of two initial messages $m_1(X)$ and $m_2(X)$ results in respective codewords $c_1(X)$ and $c_2(X)$. Let $f_i$ be an operation that operates on the i-th elements of the messages $m_1(X)$ and $m_2(X)$ (i.e. operates on $m_{1,i}$ and $m_{2,i}$) for $0 \leq i \leq k-1$ and let F be an operation on the messages $m_1(X)$ and $m_2(X)$ that results in applying $f_0, f_1 \ldots , f_{k-1}$, so that

$$m(X) = F(m_1(X), m_2(X))$$
$$= f_0(m_{1,0}, m_{2,0})X^{k-1} + f_1(m_{1,1}, m_{2,1})X^{k-2} + \cdots + f_{k-2}(m_{1,k-2}, m_{2,k-2})X + f_{k-1}(m_{1,k-1}, m_{2,k-1})$$

The question is, can the codeword $c(X)$ that would result from a non-systematic encoding of $m(X)$ be computed without having to carry out the usual decoding of $c_1(X)$ and $c_2(X)$?

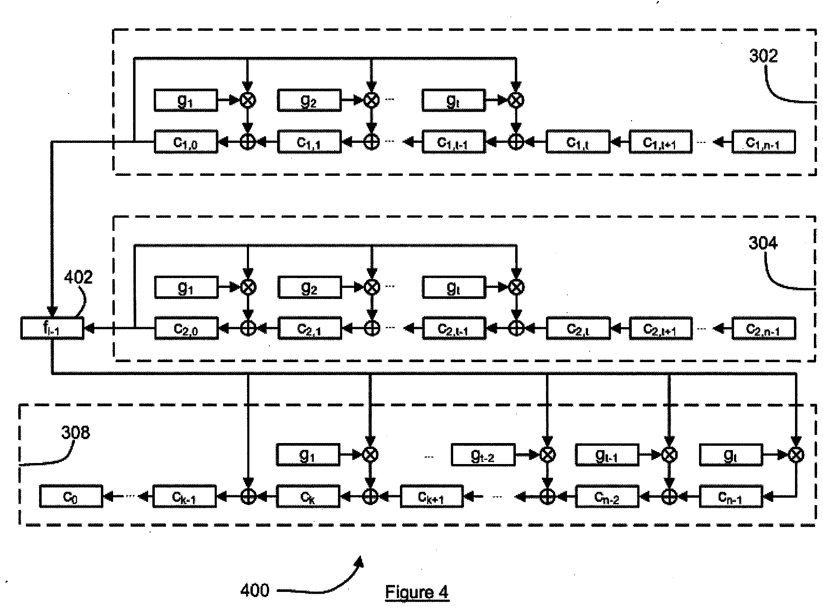

One solution to this is to use a similar approach as set out for the third approach discussed above in section 3.5 for calculating a dot product. Indeed, the dot product is an example in which $f_i(m_{1,i}m_{2,i}) = m_{1,i}m_{2,i}$ for $0 \leq i \leq$ k-1. Figure 4 therefore schematically illustrates an arrangement 400 for implementing the more general operation F. The arrangement 400 is the same as the arrangement 300 (and the description of the arrangement 300 therefore applies analogously to the arrangement 400), except that the multiplier 306 of the arrangement 300 is replaced in the arrangement 400 by an operator module 402 that is arranged to apply the function $f_{i-1}$ on the i-th iteration.

The system 400 of figure 4 can be used, for example, when, given $c_1(X)$ and $c_2(X)$ for messages $m_1(X)$ and $m_2(X)$ respectively, one wishes to determine the codeword that would result from a bit-wise operation on $m_1(X)$ and $m_2(X)$, such as an AND, OR, XOR, NAND, etc. In such a scenario, $f_i(m_{1,i}, m_{2,i})$ is the bit-wise operation on the binary representations of $m_{1,i}$ and $m_{2,i}$. Similarly, the system 400 of figure 4 can be used, for example, when, given $c_1(X)$ and $c_2(X)$ for messages $m_1(X)$ and $m_2(X)$ respectively, one wishes to determine the codeword that would result from an arithmetic operation on the elements of $m_1(X)$ and $m_2(X)$, such as additional modulo the field size q or multiplication modulo the field size q. In such a scenario, $f_i(m_{1,i}, m_{2,i}) = m_{1,i} + m_{2,i} \bmod(q)$ or $f_i(m_{1,i}, m_{2,i}) = m_{1,i} \times m_{2,i} \bmod(q)$ (where these additions and multiplications are integer addition and multiplication modulo q, rather than addition or multiplication in GF(q)). Clearly, other examples of the functions $f_i$ and the resulting function F, and combinations of such functions $f_i$ are possible.

Thus, it is possible to calculate $c(X)$ directly from $c_1(X)$, $c_2(X)$ and $g(X)$, i.e. without having to carry out the usual decoding of $c_1(X)$ and $c_2(X)$ to generate $m_1(X)$ and $m_2(X)$, operate on $m_1(X)$ and $m_2(X)$ to generate $F(m_1(X), m_2(X))$ and then ECC encode $F(m_1(X), m_2(X))$ to generate $c(X)$. Then, $F^T(m(X))=c(X)$.

### (3.7) Right shift transformation, using systematic encoding

Suppose that the function F is the right shift transformation of a message $m(X)$, so that $F(m(X)) = m^{(\rightarrow)}(X)$. Suppose additionally that the ECC is applied using systematic encoding.

Assume that a systematic encoding of an initial message $m(X)$ results in a codeword $c(X)$. The question is, can the codeword $c'(X)$ that would result from a systematic encoding of $m^{(\rightarrow)}(X)$ be computed without having to carry out the usual decoding of $c(X)$?

Recall that $c(X) = X^t m(X) + r(X)$, where $r(X)$ is the remainder after dividing $X^t m(X)$ by the generator polynomial

$$m^{(\rightarrow)}(X) = \frac{m(X) + m_{k-1}}{X}$$

$g(X)$, i.e. $r(X) := $ Parity - Check$(m(X)) = m(X)X^t + p(X)g(X)$ for some polynomial $p(X)$ and $c'(X) = X^t m^{(\rightarrow)}(X) + r'(X)$, where $r'(X)$ is the remainder after dividing $X^t m^{(\rightarrow)}(X)$ by the generator polynomial $g(X)$, i.e. $r'(X) := $ Parity - Check$(m^{(\rightarrow)}(X)) = m^{(\rightarrow)}(X)X^t + p'(X)g(X)$ for some polynomial $p'(X)$.

Hence, we need to calculate the remainder after dividing $m^{(\rightarrow)}(X)X^t$ by $g(X)$. Note that $m^{(\rightarrow)}(X)X^t = m(X)X^{t-1} + m_{k-1}X^{t-1}$. The highest degree of $g(X)$ is t. Thus, the remainder after dividing $m_{k-1}X^{t-1}$ by $g(X)$ is $m_{k-1}X^{t-1}$ itself. Additionally, note that $p'(X) = p^{(\rightarrow)}(X)$. Therefore, the remainder of dividing $m(X)X^{t-1}$ by $g(X)$ is $(p_{k-1}g(X) + r(X))^{(\rightarrow)}$, where $p_{k-1}$ is the coefficient of $X°$ in $p(X)$. Since systematic encoding is being used, we have $m_{k-1} = c_{k-1}$, and also $c_{n-1} = g_t p_{k-1}$ so that $p_{k-1} = c_{n-1}g_t^{-1}$. Hence, $r'(X) = (c_{n-1}g_t^{-1}g(X) + r(X))^{(\rightarrow)} + c_{k-1}X^{t-1}$.

Thus, $c'(X) = m^{(\rightarrow)}(X) + (c_{n-1}g_t^{-1}g(X) + r(X))^{(\rightarrow)} + c_{k-1}X^{t-1}$ (noting that $m(X)$ is represented directly in $c(X)$ and so $m^{(\rightarrow)}(X)$ is obtainable directly from $c(X)$ too).

Thus, it is possible to calculate $c'(X)$ directly from $c(X)$ and $g(X)$, i.e. without having to carry out the usual decoding of c(X) to generate m(X), operate on m(X) to generate F(m(X)) and then ECC encode F(m(X)) to generate c'(X). In this example, $F^T(c(X)) = c'(X)$ as set out above.

### (3.8) Left shift transformation, using systematic encoding

Suppose that the function F is the left shift transformation of a message m(X), so that $F(m(X)) = m^{(\leftarrow)}(X)$. Suppose additionally that the ECC is applied using systematic encoding.

Assume that a systematic encoding of an initial message m(X) results in a codeword c(X). The question is, can the codeword c'(X) that would result from a systematic encoding of $m^{(\leftarrow)}(X)$ be computed without having to carry out the usual decoding of c(X)?

Recall that $c(X) = X^t m(X) + r(X)$, where r(X) is the remainder after dividing $X^t m(X)$ by the generator polynomial g(X), i.e.

r(X) := Parity - Check(m(X)) = $m(X)X^t + p(X)g(X)$ for some polynomial p(X) $c'(X) = X^t m^{(\leftarrow)}(X) + r'(X)$, where r'(X) is the remainder after dividing
$X^t m^{(\leftarrow)}(X)$ by the generator polynomial g(X),
i.e. r'(X) := Parity - Check($m^{(\leftarrow)}(X)$) = $m^{(\leftarrow)}(X)X^t + p'(X)g(X)$ for some polynomial p'(X).

Hence, we need to calculate the remainder after dividing $m^{(\leftarrow)}(X)X^t$ by g(X). There are two scenarios to consider:

*Scenario 1:* $m_{k-1} = 0$ in m(X).

In this scenario, $m^{(\leftarrow)}(X) = Xm(X)$. Thus:

$$m^{(\leftarrow)}(X)X^t = Xm(X)X^t = Xp(X)g(X) + Xr(X).$$

Thus, the remainder after dividing $m^{(\leftarrow)}(X)X^t$ by g(X) would be remainder after dividing Xr(X) by g(X). As the highest power in Xr(X) is t, the remainder is simply: $r'(X) = Xr(X) + r_0 g(X)$.

*Scenario 2:* $m_{k-1} \neq 0$ in m(X).

In this scenario, $m^{(\leftarrow)}(X) = (m(X) + m_0 X^{k-1})X$. Thus:

$$m^{(\leftarrow)}(X)X^t = Xm(X)X^t + m_0 X^n = Xm(X)X^t + m_0(X^n + 1) + m_0$$

For a cyclic ECC, g(X) is a factor of $(X^n + 1)$. Then, using the fact that $m_0 = c_0$, $r'(X) = Xr(X) + r_0 g(X) + c_0$.

Thus, $c'(X) = m^{(\leftarrow)}(X) + r'(X)$ (where r'(X) is as set out above and we note that m(X) is represented directly in c(X) so that $m^{(\leftarrow)}(X)$ is obtainable directly from c(X) too).

Thus, it is possible to calculate c'(X) directly from c(X) and g(X), i.e. without having to carry out the usual decoding of c(X) to generate m(X), operate on m(X) to generate F(m(X)) and then ECC encode F(m(X)) to generate c'(X).

In this example, $F^T(c(X)) = c'(X)$ as set out above.

### (3.9) Circular right shift transformation, using systematic encoding

Suppose that the function F is the circular right shift transformation of a message m(X), so that $F(m(X)) = m^{(1)}(X)$. Suppose additionally that the ECC is applied using systematic encoding.

Assume that a systematic encoding of an initial message m(X) results in a codeword c(X). The question is, can the codeword c'(X) that would result from a systematic encoding of $m^{(1)}(X)$ be computed without having to carry out the usual decoding of c(X)?

Recall that $c(X) = X^t m(X) + r(X)$, where r(X) is the remainder after dividing $X^t m(X)$ by the generator polynomial g(X), i.e.

$$m^{(1)}(X) = \frac{m(X) + m_{k-1}}{X} + m_{k-1}X^{k-1},$$

r(X) := Parity - Check(m(X)) = $m(X)X^t + p(X)g(X)$ for some polynomial p(X)

and $c'(X) = X^t m^{(1)}(X) + r'(X)$, where $r'(X)$ is the remainder after dividing $X^t m^{(1)}(X)$ by the generator polynomial $g(X)$, i.e. $r'(X) := $ Parity - Check$(m^{(1)}(X)) = m^{(1)}(X)X^t + p'(X)g(X)$ for some polynomial $p'(X)$.

Hence, we need to calculate the remainder after dividing $m^{(1)}(X)X^t$ by $g(X)$. Note that $m^{(1)}(X)X^t = m^{(\rightarrow)}(X)X^t + m_{k-1}X^{n-1}$. Thus the remainder after dividing $m^{(1)}(X)X^t$ by $g(X)$ is the sum of:

(a) The remainder after dividing $m^{(\rightarrow)}(X)X^t$ by $g(X)$ - this has been discussed above in section 3.7.

(b) The remainder after dividing $m_{k-1}X^{n-1}$ by $g(X)$. Note that the remainder after dividing $m_{k-1}X^t$ by $g(X)$ is simply $m_{k-1}X^t + m_{k-1}g(X)$. As $m_{k-1}X^{n-1}$ results by applying k-1 left shifts to $m_{k-1}X^t$, the remainder after dividing $m_{k-1}X^{n-1}$ by $g(X)$ is the parity-check of the codeword that results from applying k-1 left shifts to the codeword that has $m_{k-1}X^t$ as the message and that has $m_{k-1}X^t + m_{k-1}g(X)$ as the parity-check - this can be calculated by applying the above left shift algorithm (discussed in section 3.8) k-1 times.

Thus, $c'(X) = m^{(1)}(X) + r'(X)$ (where $r'(X)$ is as set out above and we note that $m(X)$ is represented directly in $c(X)$ so that $m^{(1)}(X)$ is obtainable directly from $c(X)$ too).

Thus, it is possible to calculate $c'(X)$ directly from $c(X)$ and $g(X)$, i.e. without having to carry out the usual decoding of $c(X)$ to generate $m(X)$, operate on $m(X)$ to generate $F(m(X))$ and then ECC encode $F(m(X))$ to generate $c'(X)$.

In this example, $F^T(c(X)) = c'(X)$ as set out above.

### (3.10) Left circular shift transformation, using systematic encoding

Suppose that the function F is the circular left shift transformation of a message $m(X)$, so that $F(m(X)) = m^{(-1)}(X)$. Suppose additionally that the ECC is applied using systematic encoding.

Assume that a systematic encoding of an initial message $m(X)$ results in a codeword $c(X)$. The question is, can the codeword $c'(X)$ that would result from a systematic encoding of $m^{(-1)}(X)$ be computed without having to carry out the usual decoding of $c(X)$?

Recall that $c(X) = X^t m(X) + r(X)$, where $r(X)$ is the remainder after dividing $X^t m(X)$ by the generator polynomial $g(X)$, i.e.

$r(X) := $ Parity - Check$(m(X)) = m(X)X^t + p(X)g(X)$ for some polynomial $p(X)$ $c'(X) = X^t m^{(-1)}(X) + r'(X)$, where $r'(X)$ is the remainder after dividing
$X^t m^{(-1)}(X)$ by the generator polynomial $g(X)$,
i.e. $r'(X) := $ Parity - Check$(m^{(-1)}(X)) = m^{(-1)}(X)X^t + p'(X)g(X)$ for some polynomial $p'(X)$.

Hence, we need to calculate the remainder after dividing $m^{(-1)}(X)X^t$ by $g(X)$.

$$m^{(-1)}(X) := (m(X) + m_0 X^{k-1})X + m_0$$

$$\Rightarrow \quad m^{(-1)}(X)X^t = Xm(X)X^t + m_0 X^n + m_0 X^t$$

$$= Xm(X)X^t + m_0(X^n + 1) + m_0 X^t + m_0$$

For a cyclic ECC, $g(X)$ is a factor of $(X^n + 1)$. Then, using the fact that $m_0 = c_0$, the remainder after dividing $m^{(-1)}(X)X^t$ by $g(X)$ is

$$r'(X) = Xr(X) + r_0 g(X) + c_0 X^t + c_0 g(X) + c_0.$$

Note that this formula can be simplified by omitting the term $c_0 X^t$ as this will affect the (t+1)-th element, which is not relevant. Thus, one could write $r'(X) = Xr(X) + (r_0 + c_0)g(X) + c_0$. The same applies analogously when considering other formulae for $r'(X)$.

Thus, $c'(X) = m^{(-1)}(X) + r'(X)$ (where $r'(X)$ is as set out above and we note that $m(X)$ is represented directly in $c(X)$ so that $m^{(-1)}(X)$ is obtainable directly from $c(X)$ too).

Thus, it is possible to calculate $c'(X)$ directly from $c(X)$ and $g(X)$, i.e. without having to carry out the usual decoding of $c(X)$ to generate $m(X)$, operate on $m(X)$ to generate $F(m(X))$ and then ECC encode $F(m(X))$ to generate $c'(X)$.

In this example, $F^T(c(X)) = c'(X)$ as set out above.

### *(3.11) Dot product transformation, using systematic encoding*

Suppose that the function F is the dot product of two messages $m_1(X)$ and $m_2(X)$, so that

$$F(m_1(X), m_2(X)) = m_1(X) \bullet m_2(X) = \sum_{i=0}^{k-1} m_{1,i} m_{2,i} X^{k-1-i}$$

, the multiplication of $m_{1,i}$ with $m_{2,i}$ being the multiplication in GF(q) of two elements of GF(q) for $0 \leq i \leq k-1$. Suppose additionally that the ECC is applied using systematic encoding.

Assume that a systematic encoding of the two initial messages $m_1(X)$ and $m_2(X)$ results in respective codewords $c_1(X)$ and $c_2(X)$. Let the dot product of $m_1(X)$ and $m_2(X)$ be $m(X)$ where

$$m(X) = m_{1,0} m_{2,0} X^{k-1} + m_{1,1} m_{2,1} X^{k-2} + \cdots + m_{1,k-2} m_{2,k-2} X + m_{1,k-1} m_{2,k-1}$$

so that $m_i := m_{1,i} m_{2,i}$ for $0 \leq i \leq k-1$.

The question is, can the codeword $c(X)$ that would result from a systematic encoding of $m(X)$ be computed without having to carry out the usual decoding of $c_1(X)$ and $c_2(X)$?

As systematic encoding is being used, the value $m_i$ can be calculated directly from the codewords $c_1(X)$ and $c_2(X)$ - in particular, the coefficient of $X^{n-i-1}$ in the codewords $c_1(X)$ and $c_2(X)$ will be $m_{1,i}$ and $m_{2,i}$ respectively, so that $m_i = m_{1,i} m_{2,i}$ can be computed directly as a multiplication of these coefficients.

If we define:

$$M^{(0)}(X) = m_0 = m_{1,0} m_{2,0}$$

$$M^{(1)}(X) = X M^{(0)} X + m_1 = X M^{(0)} X + m_{1,1} m_{2,1}$$

$$\cdots$$

$$M^{(i)}(X) = X M^{(i-1)} X + m_i = X M^{(i-1)} X + m_{1,i} m_{2,i}$$

$$\cdots$$

$$M^{(k-1)}(X) = X M^{(k-2)} X + m_{k-1} = X M^{(k-2)} X + m_{1,k-1} m_{2,k-1}$$

then $m(X) = M^{(k-1)}(X)$.

For the message $M^{(0)}(X)$, the parity-check polynomial is the polynomial $m_{1,0} m_{2,0} g(X)$ - here, terms of $m_{1,0} m_{2,0} g(X)$ of degree greater than or equal to n-k are ignored, as the parity-check polynomial is of degree at most n-k-1. Thus, the codeword corresponding to the message $M^{(0)}(X)$ is determined.

For i > 0, the parity-check polynomial for message $M^{(i)}(X)$ equals the sum of:

(a) The parity-check polynomial for message $X M^{(i-1)}(X)$. This is the parity-check polynomial for the left-shift of the message $M^{(i-1)}(X)$, which can be determined using the processing set out in section 3.8 above (in scenario 1) based on the codeword determined for the message $M^{(i-1)}(X)$.
(b) The parity-check polynomial for the message $m_{1,i} m_{2,i}$. This is the polynomial $m_{1,i} m_{2,i} g(X)$.

For this summation, terms of the summation of degree greater than or equal to n-k are ignored (or discarded), as the parity-check polynomial is of degree at most n-k-1. Thus, the codeword corresponding to the message $M^{(i)}(X)$ is determined.

Hence, iteratively, the codewords for $M^{(0)}(X)$, $M^{(1)}(X)$,...,$M^{(k-1)}(X)$ may be determined. As $m(X) = M^{(k-1)}(X)$, the codeword $c(X)$ for the message $m(X)$ may be determined in this way.

Thus, as $m(X)$ can be calculated directly from $m_1(X)$ and $m_2(X)$, and as $r(X)$ can be calculated using the above, it is possible to calculate $c(X)$ directly from $c_1(X)$, $c_2(X)$ and $g(X)$, i.e. without having to carry out the usual decoding of $c_1(X)$ and $c_2(X)$ to generate $m_1(X)$ and $m_2(X)$, operate on $m_1(X)$ and $m_2(X)$ to generate $F(m_1(X),m_2(X))$ and then ECC encode $F(m_1(X),m_2(X))$ to generate $c(X)$. In this example, $F^T(c_1(X),c_2(X)) = c(X)$ as set out above.

### (3.12) A more general operation transformation, using systematic encoding

Assume that a systematic ECC encoding of two initial messages $m_1(X)$ and $m_2(X)$ results in respective codewords $c_1(X)$ and $c_2(X)$. Let $f_i$ be an operation that operates on the i-th elements of the messages $m_1(X)$ and $m_2(X)$ (i.e. operates on $m_{1,i}$ and $m_{2,i}$) for $0 \leq i \leq k-1$ and let F be an operation on the messages $m_1(X)$ and $m_2(X)$ that results in applying $f_0, f_1, \ldots, f_{k-1}$, so that

$$m(X) = F(m_1(X), m_2(X))$$
$$= f_0(m_{1,0}, m_{2,0})X^{k-1} + f_1(m_{1,1}, m_{2,1})X^{k-2} + \cdots + f_{k-2}(m_{1,k-2}, m_{2,k-2})X + f_{k-1}(m_{1,k-1}, m_{2,k-1})$$

The question is, can the codeword c(X) that would result from a non-systematic encoding of m(X) be computed without having to carry out the usual decoding of $c_1(X)$ and $c_2(X)$?

As systematic encoding is being used, the value $f_i(m_{1,j}, m_{2,j})$ can be calculated directly from the codewords $c_1(X)$ and $c_2(X)$ - in particular, the coefficient of $X^{n-i-1}$ in the codewords $c_1(X)$ and $c_2(X)$ will be $m_{1,i}$ and $m_{2,i}$ respectively, so that $f_i(m_{1,i}, m_{2,i})$ can be computed directly as a function ($f_i$) of these coefficients.

If we define:

$$M^{(0)}(X) = f_0(m_{1,0}, m_{2,0})$$

$$M^{(1)}(X) = XM^{(0)}X + f_1(m_{1,1}, m_{2,1})$$

$$\ldots$$

$$M^{(i)}(X) = XM^{(i-1)}X + f_i(m_{1,i}, m_{2,i})$$

$$\ldots$$

$$M^{(k-1)}(X) = XM^{(k-2)}X + f_{k-1}(m_{1,k-1}, m_{2,k-1})$$

$$\text{then } m(X) = M^{(k-1)}(X).$$

For the message $M^{(0)}(X)$, the parity-check polynomial is the polynomial $f_0(m_{1,0}, m_{2,0})g(X)$ - here, terms of $f_0(m_{1,0}, m_{2,0})g(X)$ of degree greater than or equal to n-k are ignored, as the parity-check polynomial is of degree at most n-k-1. Thus, the codeword corresponding to the message $M^{(0)}(X)$ is determined.

For i > 0, the parity-check polynomial for message $M^{(i)}(X)$ equals the sum of:

(a) The parity-check polynomial for message $XM^{(i-1)}(X)$. This is the parity-check polynomial for the left-shift of the message $M^{(i-1)}(X)$, which can be determined using the processing set out in section 3.8 above (in scenario 1) based on the codeword determined for the message $M^{(i-1)}(X)$.

(b) The parity-check polynomial for the message $f_i(m_{1,i}, m_{2,i})$. This is the polynomial $f_i(m_{1,i}, m_{2,i})g(X)$.

For this summation, terms of the summation of degree greater than or equal to n-k are ignored (or discarded), as the parity-check polynomial is of degree at most n-k-1. Thus, the codeword corresponding to the message $M^{(i)}(X)$ is determined.

Hence, iteratively, the codewords for $M^{(0)}(X)$, $M^{(1)}(X)$,...,$M^{(k-1)}(X)$ may be determined. As m(X) = $M^{(k-1)}(x)$, the codeword c(X) for the message m(X) may be determined in this way.

Thus, as m(X) can be calculated directly from $m_1(X)$ and $m_2(X)$, and as r(X) can be calculated using the above, it is possible to calculate c(X) directly from $c_1(X)$, $c_2(X)$ and g(X), i.e. without having to carry out the usual decoding of $c_1(X)$ and $c_2(X)$ to generate $m_1(X)$ and $m_2(X)$, operate on $m_1(X)$ and $m_2(X)$ to generate $F(m_1(X), m_2(X))$ and then ECC encode $F(m_1(X), m_2(X))$ to generate c(X). In this example, $F^T(c_1(X), c_2(X)) = c(X)$ as set out above.

### (4) g(X)-free functions

The function F shall be called g(X)-free if the corresponding function $F^T$ can be implemented in a manner that does not require knowledge of the generator polynomial g(X) of the ECC. Embodiments that implement the function $F^T$

without knowledge of, or without revealing, the generator polynomial $g(X)$ may be more secure than embodiments that make use of $g(X)$ for implementing $F^T$, since an attacker does not know the settings for the ECC and, therefore, how $E(D)$ is related to the initial data $D$ or how $F^T(E(D))$ is related to $F(D)$ in figure 1B.

Examples of $g(X)$-free functions are given below.

*(4.1) Circular right shift using non-systematic encoding*

Suppose that the input to the function $F^T$ is a codeword $c(X) = c_0 X^{n-1} + c_1 X^{n-2} + \cdots + c_{n-2} X + c_{n-1}$ that corresponds to an original message $m(X)$.

Suppose the function $F^T$ operates on the input codeword $c(X)$ by performing a circular right shift on $c(X)$, so that $F^T(c(X)) = c^{(1)}(X)$. The implementation of $F^T$ clearly does not require knowledge of $g(X)$, as $c^{(1)}(X)$ can be calculated from $c(X)$ without any knowledge of (i.e. independently of) the generator polynomial $g(X)$.

$$c^{(1)}(X) = c_{n-1} X^{n-1} + c_0 X^{n-2} + \cdots + c_{n-3} X + c_{n-2}$$
$$= \frac{c(X) + c_{n-1}}{X} + c_{n-1} X^{n-1}$$
$$= \frac{c(X) + c_{n-1}(1 + X^n)}{X}$$

If the ECC is cyclic, then the generator polynomial $g(X)$ is a factor of $X^n + 1$, so that $X^n + 1 = g(X)q(X)$ for some polynomial $q(X)$. Thus, for a cyclic ECC, we have

$$c^{(1)}(X) = \frac{c(X) + c_{n-1} g(X) q(X)}{X}$$
$$= \frac{m(X)g(X) + m_{k-1} g_t g(X) q(X)}{X}$$
$$= \frac{m(X) + m_{k-1} g_t q(X)}{X} g(X)$$

Thus, the codeword $c^{(1)}(X)$ corresponds to the message $\dfrac{m(X) + m_{k-1} g_t q(X)}{X}$ . Therefore, if function F is arranged to map the initial message $m(X)$ to the message $\dfrac{m(X) + m_{k-1} g_t q(X)}{X}$ , then the corresponding function $F^T$ maps the codeword $c(X)$ to the codeword $c^{(1)}(X)$. In this case, the function F is $g(X)$-free.

*(4.2) Circular left shift using non-systematic encoding*

Suppose that the input to the function $F^T$ is a codeword $c(X) = c_0 X^{n-1} + c_1 X^{n-2} + \cdots + c_{n-2} X + c_{n-1}$ that corresponds to an original message $m(X)$.

Suppose the function $F^T$ operates on the input codeword $c(X)$ by performing a circular left shift on $c(X)$, so that $F^T(c(X)) = c^{(-1)}(X)$. The implementation of $F^T$ clearly does not require knowledge of $g(X)$, as $c^{(-1)}(X)$ can be calculated from $c(X)$ without any knowledge of (i.e. independently of) the generator polynomial $g(X)$.

$$c^{(-1)}(X) = c_1 X^{n-1} + c_2 X^{n-2} + \cdots + c_{n-1} X + c_0$$
$$= X c(X) + c_0 (1 + X^n)$$

If the ECC is cyclic, then the generator polynomial $g(X)$ is a factor of $X^n + 1$, so that $X^n + 1 = g(X)q(X)$ for some polynomial q(X). Thus, for a cyclic ECC, we have

$$
\begin{aligned}
c^{(-1)}(X) &= Xc(X) + c_0 g(X)q(X) \\
&= Xg(X)m(X) + c_0 g(X)q(X) \\
&= (Xm(X) + c_0 q(X))g(X) \\
&= (Xm(X) + m_0 q(X))g(X)
\end{aligned}
$$

Thus, the codeword $c^{(-1)}(X)$ corresponds to the message $(Xm(X) + m_0 q(X))g(X)$. Therefore, if function F is arranged to map the initial message $m(X)$ to the message $(Xm(X) + m_0 q(X))g(X)$, then the corresponding function $F^T$ maps the codeword $c(X)$ to the codeword $c^{(-1)}(X)$. In this case, the function F is $g(X)$-free.

### *(4.3) Turing completeness*

As discussed above, there are operations F for which knowledge of the generator polynomial $g(X)$ is not required in order to implement the corresponding transformed operation $F^T$. The question is, then, whether it is possible to implement any function F as a transformed function $F^T$, where the function $F^T$ is implemented without revealing (or without knowledge of) the generator polynomial $g(X)$ for the ECC?

The XOR operation is clearly $g(X)$-free. In particular, given two codewords $c_1(X)$ and $c_2(X)$ that correspond to initial messages $m_1(X)$ and $m_2(X)$, where $c_i(X) = C_{i,0}X^{n-1} + c_{i,1}X^{n-2} + \cdots + C_{i,n-2}X + c_{i,n-1}$ for i=1,2, the XOR function $F^T$ is defined as

$$
\begin{aligned}
F^T(c_1(X), c_2(X)) &= c_1(X) \oplus c_2(X) \\
&= (c_{1,0} \oplus c_{2,0})X^{n-1} + (c_{1,1} \oplus c_{2,1})X^{n-2} + \cdots + \\
&\quad (c_{1,n-2} \oplus c_{2,n-2})X + (c_{1,n-1} \oplus c_{2,n-1})
\end{aligned}
$$

where $(c_{1,j} \oplus c_{2,j})$ is the bitwise XOR of $c_{1,j}$ and $c_{2,j}$. As $(c_{1,j} \oplus c_{2,j}) = (c_{1,j} + c_{2,j})$ in a binary system, we have that $F^T(c_1(X), c_2(X)) = c_1(X) + c_2(X)$, which is clearly $g(X)$-free. Due to the linearity of the ECC, $F^T(c_1(X), c_2(X))$ is the codeword that corresponds to the message $m_1(X) + m_2(X)$; which is the XOR of $m_1(X)$ and $m_2(X)$.

Thus, this transform function $F^T$ corresponds to the function

$$
F(m_1(X), m_2(X)) := m_1(X) \oplus m_2(X).
$$

As set out below, this XOR operation, along with conditional branching on constants, form a system which is Turing complete. This means that any mathematical function can be implemented using only (a) zero or more XOR operations and (b) zero or more conditional branchings on constants. This means that all functions F are $g(X)$-free, as any function F can be implemented using only (a) zero or more XOR operations (which are $g(X)$-free) and (b) zero or more conditional branchings on constants (which does not involve $g(X)$), so that the corresponding transform function $F^T$ could then be implemented without knowledge or reliance on the generator polynomial $g(X)$.

A Turing machine is a notional device that manipulates symbols on a strip of tape according to a table of rules. Despite its simplicity, a Turing machine can be adapted to simulate the logic of any computer algorithm. The Turing machine mathematically models a machine that mechanically operates on a tape. On this tape are symbols which the machine can read and write, one at a time, using a tape head. Operation is fully determined by a finite set of elementary instructions such as "in state 42, if the symbol seen is 0, write a 1; if the symbol seen is 1, change into state 17; in state 17, if the symbol seen is 0, write a 1 and change to state 6" etc. More precisely, a Turing machine consists of:

1. A tape which is divided into cells, one next to the other. Each cell contains a symbol from some finite alphabet. The alphabet contains a special blank symbol (here written as 'B') and one or more other symbols. The tape is assumed to be arbitrarily extendable to the left and to the right, i.e. the Turing machine is always supplied with as much tape as it needs for its computation. Cells that have not been written to before are assumed to be filled with the blank symbol.

2. A head that can read and write symbols on the tape and move the tape left and right one (and only one) cell at a time.

3. A state register that stores the current state of the Turing machine, one of finitely many states. There is one special start state with which the state register is initialized.

4. A finite table (occasionally called an action table or transition function) of one or more instructions (each usually expressed as a respective quintuple $q_i a_j \rightarrow q_{i1} a_{j1} d_k$) that specifies that: if the Turing machine is currently in the state $q_i$ and has currently read the symbol $a_j$ from the tape (i.e. the symbol currently under the head is $a_j$), then the Turing machine should carry out the following sequence of operations:

- Write $a_{j1}$ in place symbol of the current symbol $a_j$.
- Control the position of the head, as described by $d_k$. $d_k$ can have values: 'L' to indicate moving the head one cell left, 'R' to indicate moving the head one cell right; or 'N' to indicate not moving the head, i.e. staying in the same place.
- Set the current state to be the state specified by $q_{i1}$ (which may be the same as, or different from, $q_i$).

Turing machines are very well-known and shall, therefore, not be described in more detail herein.

If it can be shown that any possible 5-tuple in the action table can be implemented using the XOR operation and conditional branching, then we know that a system based on the XOR operation and conditional branching is Turing complete and, consequently (given what has been said above), that any function F is g(X)-free.

Consider the following mappings between the elements in the Turing machine and those in our proposed system:

- The alphabet size of the Turing machine is the size q of the alphabet GF(q), i.e. the alphabet for the ECC.
- Each state is implemented as a block of code with an identifier (used to jump to). Hence, the next state in the Turing machine can be realized by the Go To statement, conditioned on the current state and the content of the memory.
- The tape can be implemented as a memory holding the binary representation of the elements in the alphabet. Hence, the movements in the tape can be realized by changing the address pointing to the memory.
- A global variable, referred to as "Address", is used to point to the memory location equivalent to the tape section under the head.
- We read the memory content using its address. To write into the memory, we XOR the memory content with a constant that yields the desired value.

The following pseudo-code shows a typical state implementation (for the state with identifier "i"), where values $X_1, X_2, ..., X_q$ are constants and "Addr" is the pointer to a memory location. The example shown below illustrates the three possibilities of incrementing, decrementing and not-changing the address "Addr" variable.

```
Block i:
    {
    Mem = Memory(Addr)      // Read data stored on the tape at the current
                               address Addr
    Begin switch(Mem)
        case 1:  {Memory(Addr) = XOR(Mem,X₁), Addr ++, Go to Block j₁}
                            // If the data read equals 1, then write the
                               value 1⊕X₁ to the tape, move the head to the
                               right, and go to state j₁
        case 2:  {Memory(Addr) = XOR(Mem,X₂), Addr - -, Go to Block j₂}
                            // If the data read equals 2, then write the
                               value 2⊕X₂ to the tape, move the head to the
                               left, and go to state j₂
                    ⋮
        case q:  {Memory(Addr) = XOR(Mem,Xq), Addr, Go to Block jq}
                            // If the data read equals q, then write the
                               value q⊕Xq to the tape, keep the head at its
                               current position, and go to state jq
    end switch (Mem)
    }
```

Thus, any possible 5-tuple in the action table can be implemented using the XOR operation and conditional branching. Hence, a system based on the XOR operation and conditional branching is Turing complete and, consequently (given what has been said above), any function F is g(X)-free.

### (5) Preparation and provision of $F^T$

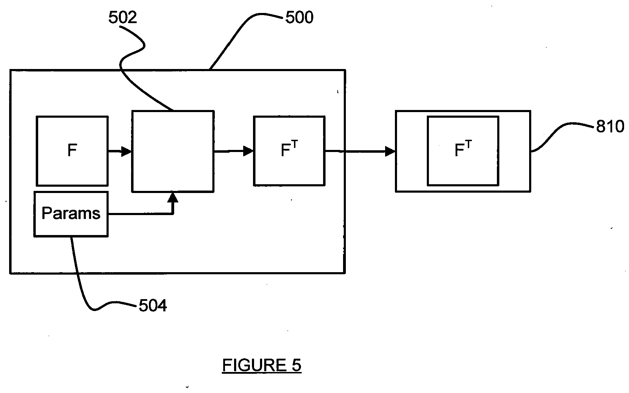

Figure 5 schematically illustrates a system according to an embodiment of the invention.

A provider 500 is arranged to take an initial algorithm (or operation or function or process) F and, using a generation program 502, generate a corresponding transformed version $F^T$ of the initial algorithm F, in a manner as set out above. The generation program 502 may make use of one or more parameters 504 to form the version $F^T$. These parameters 504 may, for example, be parameters that define the ECC that is to be performed (such as defining the generator polynomial). The provider 500 provides the version $F^T$ to a client 510, so that the client 510 can execute, use or implement the version $F^T$. The version $F^T$ may be provided to the client 510 as software and/or hardware.

### (6) Modifications

The functions set out above have been described with respect to particular sets of equations. However, other formulations of these equations can be used instead to generate the same result. The equations, or their implementations, could be optimized - for example, when implementing an embodiment of the invention using a target device with a particular architecture, the equations used could be optimized for that device or architecture. It will, therefore, be appreciated that embodiments of the invention are not limited to the equations set out above, but may be based on other equivalent sets of equations.

It will be appreciated that the methods described have been shown as individual steps carried out in a specific order. However, the skilled person will appreciate that these steps may be combined or carried out in a different order whilst still achieving the desired result.

It will be appreciated that embodiments of the invention may be implemented using a variety of different information processing systems. In particular, although the figures and the discussion thereof provide an exemplary computing system and methods, these are presented merely to provide a useful reference in discussing various aspects of the invention. Embodiments of the invention may be carried out on any suitable data processing device, such as a personal computer, laptop, personal digital assistant, mobile telephone, set top box, television, server computer, etc. Of course, the description of the systems and methods has been simplified for purposes of discussion, and they are just one of many different types of system and method that may be used for embodiments of the invention. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more field-programmable-gate-arrays (FPGAs), and/or one or more application-specific-integrated-circuits (ASICs), and/or one or more digital-signal-processors (DSPs), and/or other hardware arrangements. Method steps implemented in flowcharts contained herein, or as described above, may each be implemented by corresponding respective modules; multiple method steps implemented in flowcharts contained herein, or as described above, may together be implemented by a single module.

It will be appreciated that, insofar as embodiments of the invention are implemented by a computer program, then a storage medium and a transmission medium carrying the computer program form aspects of the invention. The computer program may have one or more program instructions, or program code, which, when executed by a computer carries out an embodiment of the invention. The term "program," as used herein, may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM or a BluRay disc), or a memory (such as a ROM, a RAM, EEPROM, EPROM, Flash memory or a portable/removable memory device), etc. The transmission medium may be a communications signal, a data broadcast, a communications link between two or more computers, etc.

**Claims**

1. A method of processing data, using a data processor (208), according to a first predetermined function (F), the method comprising:

  receiving an encoded amount of data (E(D)), wherein the encoded amount of data is an amount of data (D) that has been encoded using an error control code;and
  processing the encoded amount of data (E(D)) using a second predetermined ($F^T$) function to generate an output; wherein the second predetermined function ($F^T$) corresponds to the first predetermined function (F) in that the result of processing, with the second predetermined function ($F^T$), an amount of data encoded using the error control code equals the result of encoding with the error control code the result of processing the amount of data with the first predetermined function (F).

2. The method of claim 1, comprising:
  using the error control code to detect whether there is an error in the received encoded amount of data (E(D)) or whether there is an error in the output and, if an error is detected, performing one or more of:

  (a) setting the output to be substantially unrelated to the received encoded amount of data (E(D));
  (b) setting the output to be a random value;
  (c) performing an error correction decoding operation of the error control code on the received encoded amount of data (E(D)) or on the output;
  (d) ceasing further processing operations.

3. A method of enabling a data processor (208) to process data (D) according to a first predetermined function (F), the method comprising:

  generating a second function ($F^T$) that corresponds to the first predetermined function (F) in that the result of processing, with the second function ($F^T$), an amount of data encoded using a predetermined error control code equals the result of encoding with the error control code the result of processing the amount of data with the first predetermined function (F); and

configuring the data processor (208) to use the second function ($F^T$) to process encoded data (E(D)), wherein the encoded data (E(D)) is data (D) encoded according to the error control code.

4. The method of claim 3, wherein it is not possible to determine a generator polynomial of the predetermined error control code from the second function.

5. A method of providing data (D) to a first entity from a second entity, the first entity being arranged to process the data (D) according to a first predetermined function (F) by carrying out a method according to claim 1 or 2, the method comprising:

the second entity encoding the data (D) using an error control code to thereby generate an encoded amount of data (E(D)); and
the second entity providing the encoded amount of data (E(D)) to the first entity.

6. The method of claim 5, comprising the second entity adding a correctable error to the encoded amount of data (E(D)) before providing the encoded amount of data (E(D)) to the first entity.

7. The method of claim 6, wherein the error is dependent on the data.

8. The method of claim 6, wherein the error is randomly generated.

9. The method of any one of claims 6 to 8, wherein the second entity is arranged to add a first error to the encoded amount of data (E(D)) at a first time of providing the encoded amount of data (E(D)) to the first entity and is arranged to add a second error to the encoded amount of data (E(D)) at a second time of providing the encoded amount of data (E(D)) to the first entity, wherein the second error is different from the first error.

10. The method of any one of claims 5 to 9, wherein the error correction code used by the first entity and the second entity is dependent, at least in part, on the data.

11. A system arranged to carry out a method according to any one of the preceding claims.

12. A computer program which, when executed by a processor, causes the processor to carry out a method according to any one of claims 1 to 10.

13. A computer readable medium storing a computer program according to claim 12.

**Patentansprüche**

1. Verfahren zum Verarbeiten von Daten unter Verwendung eines Datenprozessors (208) gemäß einer ersten vorgegebenen Funktion (F), wobei das Verfahren umfasst:

Empfangen einer kodierten Datenmenge (E(D)), wobei die kodierte Datenmenge eine Datenmenge (D) ist, die unter Verwendung eines Fehlerkontrollcodes kodiert wurde; und
Verarbeiten der kodierten Datenmenge (E(D)) unter Verwendung einer zweiten vorgegebenen Funktion ($F^T$), um eine Ausgabe zu erzeugen;
wobei die zweite vorgegebene Funktion ($F^T$) der ersten vorgegebenen Funktion (F) insofern entspricht, als das Ergebnis der Verarbeitung einer unter Verwendung des Fehlerkontrollcodes codierten Datenmenge mit der zweiten vorgegebenen Funktion ($F^T$) gleich dem Ergebnis der Codierung, mit dem Fehlerkontrollcode, des Ergebnisses der Verarbeitung der Datenmenge mit der ersten vorgegebenen Funktion (F) ist.

2. Verfahren nach Anspruch 1, das umfasst:
Verwenden des Fehlerkontrollcodes, um zu erkennen, ob in der empfangenen kodierten Datenmenge (E(D)) ein Fehler vorliegt oder ob in der Ausgabe ein Fehler vorliegt, und, wenn ein Fehler erkannt wird, Durchführen eines oder mehrerer der folgenden Schritte:

(a) Einstellen der Ausgabe so, dass sie im Wesentlichen ohne Bezug zur empfangenen kodierten Datenmenge (E(D)) ist;

(b) Einstellen der Ausgabe auf einen Zufallswert;
(c) Durchführen einer Fehlerkorrektur-Dekodieroperation des Fehlerkontrollcodes an der empfangenen kodierten Datenmenge (E(D)) oder an der Ausgabe;
(d) Beenden von weiteren Verarbeitungsvorgängen.

3. Verfahren, um einen Datenprozessor (208) in die Lage zu versetzen, Daten (D) gemäß einer ersten vorgegebenen Funktion (F) zu verarbeiten, wobei das Verfahren umfasst:

Erzeugen einer zweiten Funktion ($F^T$), die der ersten vorgegebenen Funktion (F) insofern entspricht, als das Ergebnis der Verarbeitung einer unter Verwendung eines vorgegebenen Fehlerkontrollcodes codierten Datenmenge mit der zweiten Funktion ($F^T$) gleich dem Ergebnis der Codierung des Ergebnisses der Verarbeitung der Datenmenge mit der ersten vorgegebenen Funktion (F) mit dem Fehlerkontrollcode ist; und
Konfigurieren des Datenprozessors (208), um zum Verarbeiten kodierter Daten (E(D)) die zweite Funktion ($F^T$) zu verwenden, wobei die kodierten Daten (E(D)) gemäß dem Fehlerkontrollcode kodierte Daten (D) sind.

4. Verfahren nach Anspruch 3, bei dem es nicht möglich ist, ein Generatorpolynom des vorgegebenen Fehlerkontrollcodes aus der zweiten Funktion zu bestimmen.

5. Verfahren zum Bereitstellen von Daten (D) für eine erste Entität von einer zweiten Entität, wobei die erste Entität eingerichtet ist, die Daten (D) gemäß einer ersten vorgegebenen Funktion (F) durch Ausführen eines Verfahrens nach Anspruch 1 oder 2 zu verarbeiten, wobei das Verfahren umfasst:

Codieren der Daten (D) durch die zweite Entität unter Verwendung eines Fehlerkontrollcodes, um dadurch eine codierte Datenmenge (E(D)) zu erzeugen; und
Bereitstellen der kodierten Datenmenge (E(D)) für die erste Entität durch die zweite Entität.

6. Verfahren nach Anspruch 5, das umfasst: Hinzufügen eines korrigierbaren Fehlers zu der kodierten Datenmenge (E(D)) durch die zweite Entität, bevor die kodierte Datenmenge (E(D)) für die erste Entität bereitgestellt wird.

7. Verfahren nach Anspruch 6, bei dem der Fehler von den Daten abhängig ist.

8. Verfahren nach Anspruch 6, bei dem der Fehler zufällig erzeugt wird.

9. Verfahren nach einem der Ansprüche 6 bis 8, bei dem die zweite Entität eingerichtet ist, bei erstmaliger Bereitstellung der kodierten Datenmenge (E(D)) für die erste Entität einen ersten Fehler zu der kodierten Datenmenge (E(D)) hinzuzufügen, und eingerichtet ist, bei zweitmaliger Bereitstellung der kodierten Datenmenge (E(D)) für die erste Entität einen zweiten Fehler zu der kodierten Datenmenge (E(D)) hinzuzufügen, wobei der zweite Fehler sich von dem ersten Fehler unterscheidet.

10. Verfahren nach einem der Ansprüche 5 bis 9, bei dem der von der ersten Entität und der zweiten Entität verwendete Fehlerkorrekturcode zumindest teilweise von den Daten abhängig ist.

11. System, das eingerichtet ist, um ein Verfahren nach einem der vorhergehenden Ansprüche auszuführen.

12. Computerprogramm, das, wenn es von einem Prozessor ausgeführt wird, den Prozessor veranlasst, ein Verfahren nach einem der Ansprüche 1 bis 10 auszuführen.

13. Computerlesbares Medium, das ein Computerprogramm nach Anspruch 12 speichert.

**Revendications**

1. Procédé de traitement de données, en utilisant un processeur de données (208), selon une première fonction prédéterminée (F), le procédé comprenant les étapes consistant à :

recevoir une quantité codée de données (E(D)), dans lequel la quantité codée de données est une quantité de données (D) qui a été codée en utilisant un code de contrôle d'erreurs ; et
traiter la quantité codée de données (E(D)) en utilisant une seconde fonction prédéterminée ($F^T$) afin de générer une sortie ;

dans lequel la seconde fonction prédéterminée ($F^T$) correspond à la première fonction prédéterminée (F) en ce sens que le résultat de traitement, avec la seconde fonction prédéterminée ($F^T$), d'une quantité de données codée en utilisant le code de contrôle d'erreurs est égal au résultat de codage avec le code de contrôle d'erreurs du résultat de traitement de la quantité de données avec la première fonction prédéterminée (F).

2. Procédé selon la revendication 1, comprenant :

l'utilisation du code de contrôle d'erreurs pour détecter s'il existe une erreur dans la quantité codée de données reçue (E(D)) ou s'il existe une erreur dans la sortie et, si une erreur est détectée, l'exécution d'une ou plusieurs des étapes consistant à :

(a) établir la sortie pour qu'elle soit sensiblement non associée à la quantité codée de données reçue (E(D)) ;
(b) établir la sortie pour qu'elle soit une valeur aléatoire ;
(c) effectuer une opération de décodage à correction d'erreurs du code de contrôle d'erreurs sur la quantité codée de données reçue (E(D)) ou sur la sortie ;
(d) cesser d'autres opérations de traitement.

3. Procédé pour permettre à un processeur de données (208) de traiter des données (D) selon une première fonction prédéterminée (F), le procédé comprenant les étapes consistant à :

générer une seconde fonction ($F^T$) qui correspond à la première fonction prédéterminée (F) en ce sens que le résultat de traitement, avec la seconde fonction ($F^T$), d'une quantité de données codée en utilisant un code de contrôle d'erreurs prédéterminé est égal au résultat de codage avec le code de contrôle d'erreurs du résultat de traitement de la quantité de données avec la première fonction prédéterminée (F) ; et
configurer le processeur de données (208) pour utiliser la seconde fonction ($F^T$) pour traiter des données codées (E(D)), les données codées (E(D)) étant des données (D) codées selon le code de contrôle d'erreurs.

4. Procédé selon la revendication 3, dans lequel il n'est pas possible de déterminer un polynôme générateur du code de contrôle d'erreurs prédéterminé à partir de la seconde fonction.

5. Procédé de fourniture de données (D) à une première entité à partir d'une seconde entité, la première entité étant agencée pour traiter les données (D) selon une première fonction prédéterminée (F) en réalisant un procédé selon la revendication 1 ou 2, le procédé comprenant :

le codage par la seconde entité des données (D) en utilisant un code de contrôle d'erreurs afin de générer ainsi une quantité codée de données (E(D)) ; et
la fourniture par la seconde entité de la quantité codée de données (E(D)) à la première entité.

6. Procédé selon la revendication 5, comprenant l'ajout par la seconde entité d'une erreur corrigible à la quantité codée de données (E(D)) avant la fourniture de la quantité codée de données (E(D)) à la première entité.

7. Procédé selon la revendication 6, dans lequel l'erreur dépend des données.

8. Procédé selon la revendication 6, dans lequel l'erreur est générée de manière aléatoire.

9. Procédé selon l'une quelconque des revendications 6 à 8, dans lequel la seconde entité est agencée pour ajouter une première erreur à la quantité codée de données (E(D)) à un premier moment de fourniture de la quantité codée de données (E(D)) à la première entité et est agencée pour ajouter une seconde erreur à la quantité codée de données (E(D)) à un second moment de fourniture de la quantité codée de données (E(D)) à la première entité, la seconde erreur étant différente de la première erreur.

10. Procédé selon l'une quelconque des revendications 5 à 9, dans lequel le code de correction d'erreurs utilisé par la première entité et la seconde entité dépend, au moins en partie, des données.

11. Système agencé pour réaliser un procédé selon l'une quelconque des revendications précédentes.

12. Programme informatique qui, lorsqu'il est exécuté par un processeur, amène le processeur à réaliser un procédé selon l'une quelconque des revendications 1 à 10.

**13.** Support lisible par ordinateur stockant un programme informatique selon la revendication 12.

D

F

F(D)

FIGURE 1A

E(D)

$F^T$

$F^T(E(D))=E(F(D))$

FIGURE 1B

E(D)

$E^{-1}$

D

F

F(D)

E

E(F(D))

FIGURE 1C

FIGURE 2

Figure 3

EP 2 885 785 B1

Figure 4

FIGURE 5

**EP 2 885 785 B1**

**Patent documents cited in the description**

- US 20110004812 A
- US 20110185265 A
- US 20120246548 A